# EUROPEAN PATENT APPLICATION

(11) **EP 4 850 971 A1**
(43) Date of publication of application: **09.12.2026**
(21) Application number: 25747583.0
(22) Date of filing: 17.01.2025
(51) Int. Cl.: B60L 53/62

(54) **CHARGING SYSTEM, CHARGING CONTROL METHOD, CONTROLLER AND VEHICLE**

(30) Priority: 31.01.2024 CN 202410144741; 31.01.2024 CN 202410144725; 01.02.2024 CN 202410144877
(71) Applicant: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); CHEN, Yuxi, Shenzhen, Guangdong 518118 (CN); QIAO, Lipeng, Shenzhen, Guangdong 518118 (CN); LAN, Zhongling, Shenzhen, Guangdong 518118 (CN); SUN, Zhengyang, Shenzhen, Guangdong 518118 (CN); ZHOU, Qiang, Shenzhen, Guangdong 518118 (CN)
(74) Representative: Mathys & Squire
(86) International application number: PCT/CN2025/073106
(87) International publication number: WO 2025/162011

(57) **Abstract**

A charging system, comprising a charging circuit (201) and a controller (202). The charging circuit (201) comprises: an inductive element (2011), a bridge arm module (2012) and a switch component (2013). The charging system is used for charging a power battery (300). One end of the switch component (2013) is adapted to connect to a power supply apparatus (400), and the other end thereof is electrically connected to a first end of the inductive element (2011). A second end of the inductive element (2011) is adapted to connect to the power battery (300) by means of the bridge arm module (2012). The controller (202) is used for controlling the switch component (2013) and the bridge arm module (2012) on the basis of a target charging mode, so as to charge the power battery (300) by means of the power supply apparatus (400) and/or the inductive element (2011). The charging system can be compatible with power supply apparatuses having different voltages without additional circuit structure. Further provided are a charging control method, a controller implementing the charging control method, and a vehicle comprising the controller or the charging system.

## Description

### CROSS-REFERENCE TO RELATED APPLICATION

The present disclosure claims priorities to Chinese Patent Application No. 202410144741.0, filed with the China National Intellectual Property Administration on January 31, 2024 and entitled "CHARGING CONTROL METHOD, CHARGING SYSTEM, CONTROLLER, AND VEHICLE", to Chinese Patent Application No. 202410144725.1, filed with the China National Intellectual Property Administration on January 31, 2024 and entitled "CHARGING APPARATUS AND ELECTRIC DEVICE", and to Chinese Patent Application No. 202410144877.1, filed with the China National Intellectual Property Administration on February 1, 2024 and entitled "CHARGING SYSTEM AND ELECTRIC VEHICLE", all of which are incorporated herein by reference in their entireties.

### TECHNICAL FIELD

The present disclosure relates to the field of vehicle technologies, and in particular, to a charging system, a charging control method, a controller, and a vehicle.

### BACKGROUND

As the voltage ranges of power batteries across different vehicle models become increasingly broad, the power required for charging varies significantly. In addition, the output capabilities of charging piles from different manufacturers vary. Therefore, a power battery needs to be charged through voltage boosting or voltage bucking. Furthermore, before charging of the power battery begins, a precharge capacitor needs to be precharged via a capacitor precharge circuit, to protect the power battery from being damaged by large currents.

### SUMMARY

The present disclosure provides a charging system, a charging control method, a controller, and a vehicle, to address the problems existing in the related art.

According to a first aspect of embodiments of the present disclosure, a charging system is provided. The charging system includes a charging circuit and a controller. The charging circuit is connected to the controller, and the charging circuit includes an inductive element, a bridge arm module, and a switch component. The charging system is configured to charge a power battery.

One end of the switch component is configured to connect to the power supply apparatus. The other end of the switch component is connected to a first end of the inductive element. A second end of the inductive element is configured to connect to the power battery via the bridge arm module.

The controller is configured to control the switch component and the bridge arm module according to a target charging mode, to charge the power battery via the power supply apparatus and/or the inductive element. The target charging mode includes at least one of the following: a boost charging mode, a buck charging mode, and a direct charging mode.

Optionally, the controller is further configured to:
determine the target charging mode from preset charging modes based on an output voltage of the power supply apparatus and a battery voltage of the power battery.

Optionally, the switch component includes a first switch component and a second switch component.

The power battery is configured to connect to the power supply apparatus via the first switch component and the second switch component. The power battery is further configured to connect to the bridge arm module via the first switch component. The inductive element is configured to connect to the power supply apparatus via the second switch component.

Optionally, the charging circuit further includes a precharge capacitor.

The precharge capacitor is configured to connect in parallel to the power battery via the first switch component. The precharge capacitor is further connected to the bridge arm module.

The controller is configured to control the switch component and the bridge arm module according to a target charging mode, to precharge the precharge capacitor via the power supply apparatus and/or the inductive element.

Optionally, the charging circuit further includes a filter capacitor.

One end of the filter capacitor is connected to the bridge arm module. The other end of the filter capacitor is connected to the inductive element.

Optionally, a first end of the precharge capacitor is connected to an upper bridge arm of the bridge arm module, a second end of the precharge capacitor is connected to a lower bridge arm of the bridge arm module, a bridge arm midpoint of the bridge arm module is connected to the first end of the inductive element, the second end of the inductive element is connected to the second switch component, the upper bridge arm of the bridge arm module is further connected to the second switch component, and the lower bridge arm of the bridge arm module is further connected to the second switch component.

Optionally, the first switch component includes a first contactor, a second contactor, and a third contactor; and the second switch component includes a first switching transistor, a second switching transistor, and a fourth contactor.

A first end of the first contactor is configured to connect to a first end of the power battery. A second end of the first contactor is connected to the first end of the precharge capacitor.

A first end of the second contactor is configured to connect to a second end of the power battery. A second end of the second contactor is connected to the second end of the precharge capacitor.

A first end of the third contactor is configured to connect to the first end of the power battery. A second end of the third contactor is connected to the second end of the inductive element.

A first end of the first switching transistor is connected to the upper bridge arm of the bridge arm module. A second end of the first switching transistor is configured to connect to a first end of the power supply apparatus.

A first end of the fourth contactor is connected to the lower bridge arm of the bridge arm module. A second end of the fourth contactor is configured to connect to a second end of the power supply apparatus.

A first end of the second switching transistor is connected to the second end of the inductive element. A second end of the second switching transistor is configured to connect to the first end of the power supply apparatus.

Optionally, the controller is specifically configured to:
close the fourth contactor, turn on the second switching transistor, open the first contactor, the second contactor, and the third contactor, and turn off the first switching transistor; and
periodically control a switching transistor of the upper bridge arm of the bridge arm module and a switching transistor of the lower bridge arm of the bridge arm module to be alternately turned on, to perform boost precharging on the precharge capacitor according to the boost charging mode; and
the controller is specifically configured to:
   close the first contactor, the second contactor, and the fourth contactor, turn on the second switching transistor, open the third contactor, and turn off the first switching transistor; and
   periodically control the upper switching transistor and the lower switching transistor of the bridge arm module to be alternately turned on, to perform boost charging on the power battery according to the boost charging mode.

Optionally, the controller is specifically configured to:
close the fourth contactor, turn on the switching transistor of the upper bridge arm of the bridge arm module, open the first contactor, the second contactor, and the third contactor, and turn off the first switching transistor and the switching transistor of the lower bridge arm of the bridge arm module; and
periodically turn on the second switching transistor to perform buck precharging on the precharge capacitor according to the buck charging mode; and
the controller is specifically configured to:
   close the second contactor and the third contactor, turn on the first switching transistor, close the fourth contactor, open the first contactor, and turn off the second switching transistor; and
   periodically control the switching transistor of the upper bridge arm of the bridge arm module and the switching transistor of the lower bridge arm of the bridge arm module to be alternately turned on, to perform buck charging on the power battery according to the buck charging mode.

Optionally, the controller is specifically configured to:
close the fourth contactor, open the first contactor, the second contactor, and the third contactor, and turn off the second switching transistor, the switching transistor of the upper bridge arm of the bridge arm module, and the switching transistor of the lower bridge arm of the bridge arm module; and
periodically turn on the first switching transistor to perform direct precharging on the precharge capacitor according to the direct charging mode; and
the controller is specifically configured to:
   close the first contactor, the second contactor, and the fourth contactor, open the third contactor, and turn off the second switching transistor, the switching transistor of the upper bridge arm of the bridge arm module, and the switching transistor of the lower bridge arm of the bridge arm module; and
   periodically turn on the first switching transistor, and after the output voltage of the power supply apparatus remains within a preset voltage range, maintain the first switching transistor on to perform direct charging on the power battery according to the direct charging mode.

Optionally, the switch component includes a switching transistor.

One end of the switching transistor is configured to electrically connect to the power supply apparatus via a charging port. The other end of the switching transistor is connected to the first end of the inductive element.

The second end of the inductive element is configured to electrically connect to the power battery via the bridge arm module.

The controller is configured to:
when the charging system operates in the boost charging mode, control an operating state of the switching transistor, and form a boost charging circuit using the inductive element and the bridge arm module, to boost a voltage received at the charging port and then charge the power battery; and
when the charging system operates in the buck charging mode, control an operating state of the switch component, and form a buck charging circuit using the inductive element and the bridge arm module, to buck the voltage received at the charging port and then charge the power battery.

Optionally, the switch component includes a first switching transistor and a second switching transistor.

A first end of the first switching transistor is configured to electrically connect to a first end of the charging port.

A second end of the first switching transistor is electrically connected to the first end of the inductive element.

A first end of the second switching transistor is electrically connected to the first end of the inductive element.

A second end of the second switching transistor is configured to electrically connect to a second end of the charging port.

The second end of the first switching transistor is electrically connected to the first end of the second switching transistor, and an electrical connection point is electrically connected to the first end of the inductive element.

Optionally, the charging system further includes a filter capacitor.

One end of the filter capacitor is electrically connected to the first end of the inductive element. The other end of the filter capacitor is electrically connected to a negative terminal of the bridge arm module.

The filter capacitor is configured to filter electrical energy received at the charging port.

Optionally, the charging system further includes a fifth contactor or a fourth contactor.

One end of the fifth contactor is electrically connected to a second end of the switching transistor. The other end of the fifth contactor is connected to the first end of the inductive element.

The fifth contactor is configured to control opening and closing of a circuit between the second end of the switching transistor and the first end of the inductive element.

One end of the fourth contactor is electrically connected to the negative terminal of the bridge arm module. The other end of the fourth contactor is configured to electrically connect to the second end of the charging port.

The fourth contactor is configured to control opening and closing of a circuit between the charging port and the negative terminal of the bridge arm module.

Optionally, the first switching transistor includes a first field-effect transistor, and the second switching transistor includes a second field-effect transistor.

A first end of the first field-effect transistor is configured to electrically connect to the first end of the charging port. A third end of the first field-effect transistor is configured to receive a first control signal. A second end of the first field-effect transistor is electrically connected to the first end of the inductive element.

A first end of the second field-effect transistor is electrically connected to the first end of the inductive element. A third end of the second field-effect transistor is configured to receive the second control signal. A second end of the second field-effect transistor is electrically connected to the second end of the charging port and a negative terminal of the power battery separately.

Optionally, the inductive element includes an N-phase winding, and the bridge arm module includes N bridge arms connected in parallel.

First ends of the N-phase winding are electrically connected to the other end of the switching transistor.

Second ends of the N-phase winding are connected to midpoints of the N bridge arms in a one-to-one correspondence. N is an integer greater than or equal to 1.

Optionally, the controller is specifically configured to:
when the charging system operates in the boost charging mode, control the first switching transistor to be turned on and the second switching transistor to be turned off, and control respective upper switching transistors of the N bridge arms to be turned off and a lower switching transistor of at least one bridge arm to be turned on for a first preset time, causing the N-phase winding to be charged by the electrical energy received at the charging port;
after turn-on for the first preset time, control respective lower switching transistors of the N bridge arms to be turned off and an upper switching transistor of the at least one bridge arm to be turned on, causing the power battery to be jointly charged via the charging port and the N-phase winding; and
repeat the foregoing process until charging ends.

Optionally, the controller is specifically configured to:
when the charging system operates in the buck charging mode, in a first stage, control the first switching transistor to be turned on and the second switching transistor to be turned off, and control the respective lower switching transistors of the N bridge arms to be turned off and an upper switching transistor of at least one bridge arm to be turned on, causing the N-phase winding and the power battery to be simultaneously charged via the charging port;
in a second stage, control the first switching transistor to be turned off and the second switching transistor to be turned on, and control the respective lower switching transistors of the N bridge arms to be turned off and the upper switching transistor of the at least one bridge arm to be turned on, causing the power battery to be buck-charged by a freewheeling current of the N-phase winding; and
repeat the foregoing process until charging ends.

Optionally, the charging system further includes a precharge capacitor, a first contactor, and a second contactor.

The precharge capacitor is electrically connected to a positive terminal and the negative terminal of the power battery.

The controller is specifically configured to:
when the charging system operates in a boost precharging mode, control the first switching transistor to be turned on, the second switching transistor to be turned off, and the first contactor and the second contactor to be opened, and control the respective upper switching transistors of the N bridge arms to be turned off and a lower switching transistor of at least one bridge arm to be turned on for a second preset time, causing the three-phase winding to be charged by the electrical energy received at the charging port or electrical energy provided by an in-vehicle power supply; and
after turn-on for the second preset time, control the respective lower switching transistors of the N bridge arms to be turned off and an upper switching transistor of the at least one bridge arm to be turned on, causing the precharge capacitor to be jointly charged by the freewheeling current of the three-phase winding, and the electrical energy received at the charging port or the electrical energy provided by the in-vehicle power supply; and repeat the process until a difference between a voltage of the precharge capacitor and a current real-time voltage of the power battery falls within a preset range;
when the charging system operates in a buck precharging mode, in a first stage, control the first contactor and the second contactor to be opened, the first switching transistor to be turned on, and the second switching transistor to be turned off, and control the respective lower switching transistors of the N bridge arms to be turned off and an upper switching transistor of at least one bridge arm to be turned on, causing the N-phase winding and the precharge capacitor to be simultaneously charged by the electrical energy received at the charging port or the electrical energy provided by the in-vehicle power supply; and
in a second stage, control the first contactor and the second contactor to be opened, the first switching transistor to be turned off, and the second switching transistor to be turned on, and control the respective lower switching transistors of the N bridge arms to be turned off and the upper switching transistor of the at least one bridge arm to be turned on, causing the precharge capacitor to continue to be buck-charged by the freewheeling current of the N-phase winding; and repeat the process until the difference between the voltage of the precharge capacitor and the current real-time voltage of the power battery falls within the preset range; and
when the charging system operates in a direct precharging mode, control the first switching transistor to be turned on, the second switching transistor to be turned off, and the first contactor and the second contactor to be opened, and control the respective lower switching transistors of the N bridge arms to be turned off and an upper switching transistor of at least one bridge arm to be turned on, causing the electrical energy received at the charging port or the electrical energy provided by the in-vehicle power supply to be transmitted to the precharge capacitor via the N-phase winding and the upper switching transistor of the at least one bridge arm and to directly charge the precharge capacitor until the difference between the voltage of the precharge capacitor and the current real-time voltage of the power battery falls within the preset range.

Optionally, the power supply apparatus includes a direct current power supply.

A first end of the bridge arm module is configured to connect to a positive terminal of the power battery. A second end of the bridge arm module is configured to connect to a negative terminal of the power battery. The first end of the inductive element is configured to connect to the direct current power supply via the switch component. A bridge arm midpoint of the bridge arm module is connected to the second end of the inductive element. The second end of the bridge arm module is configured to connect to the direct current power supply.

When the charging system operates in a boost mode, the controller controls an on/off state of the switch component, to cause the bridge arm module and the inductive element to form a boost circuit.

When the charging system operates in a buck mode, the controller controls the on/off state of the switch component, to cause the bridge arm module and the inductive element to form a buck circuit.

Optionally, the switch component includes a first contactor and a second contactor. The positive terminal of the power battery is configured to connect to a first end of the first contactor. A second end of the first contactor is connected to the first end of the bridge arm module. The negative terminal of the power battery is configured to connect to a first end of the second contactor. A second end of the second contactor is connected to the second end of the bridge arm module.

Optionally, the switch component further includes a third contactor, a sixth contactor, and a seventh contactor. The first end of the first contactor is connected to a first end of the third contactor. The second end of the first contactor is connected to a first end of the seventh contactor. A second end of the seventh contactor is configured to connect to a positive terminal of the direct current power supply and a first end of the sixth contactor. A second end of the third contactor is connected to a second end of the sixth contactor. The second end of the sixth contactor is configured to connect to the first end of the inductive element. A negative terminal of the direct current power supply is configured to connect to the second end of the bridge arm module.

Optionally, the charging system further includes a precharge capacitor. The second end of the first contactor is connected to a first end of the precharge capacitor. The second end of the second contactor is connected to a second end of the precharge capacitor.

Optionally, the bridge arm module includes N bridge arm units connected in parallel. Each bridge arm unit includes an upper switching transistor and a lower switching transistor connected in series. The inductive element includes N inductors. First ends of the N inductors are connected to the second end of the sixth contactor. Second ends of the N inductors are connected to bridge arm midpoints of the N bridge arm units in a one-to-one correspondence. A bridge arm midpoint of each bridge arm unit is a connection point between the upper switching transistor and the lower switching transistor of each bridge arm unit. N is an integer greater than or equal to 1.

Optionally, the switch component further includes a fourth contactor and a fifth contactor.

The negative terminal of the direct current power supply is configured to connect to a first end of the fourth contactor. A second end of the fourth contactor is connected to the second end of the second contactor.

The second end of the sixth contactor is connected to a first end of the fifth contactor. A second end of the fifth contactor is connected to the first end of the inductive element.

Optionally, the charging system further includes a filter capacitor. A first end of the filter capacitor is connected to the second end of the sixth contactor. A second end of the filter capacitor is connected to the second end of the fourth contactor.

Optionally, that the controller controls the on/off state of the switch component, to cause the bridge arm module and the inductive element to form the boost circuit includes:
in a first stage, the controller controls the sixth contactor, the fourth contactor, and the fifth contactor to be all closed, the third contactor and the seventh contactor to be both opened, at least one lower switching transistor of the bridge arm module to be turned on, and N upper switching transistors of the bridge arm module to be all turned off, to cause the direct current power supply to charge the inductive element.

In a second stage, the controller controls the first contactor, the second contactor, the sixth contactor, the fourth contactor, and the fifth contactor to be all closed, the third contactor and the seventh contactor to be both opened, at least one upper switching transistor of the bridge arm module to be turned on, and N lower switching transistors of the bridge arm module to be all turned off, to cause the direct current power supply and the inductive element to charge the power battery.

Optionally, that the controller controls the on/off state of the switch component, to cause the bridge arm module and the inductive element to form the buck circuit includes:
in a first stage, the controller controls the second contactor, the third contactor, the seventh contactor, the fourth contactor, and the fifth contactor to be all closed, the first contactor and the sixth contactor to be both opened, at least one upper switching transistor of the bridge arm module to be turned on, and N lower switching transistors of the bridge arm module to be all turned off, to cause the direct current power supply to charge the inductive element and the power battery.

In a second stage, the controller controls the second contactor, the third contactor, and the fifth contactor to be all closed, the first contactor and the sixth contactor to be both opened, at least one lower switching transistor of the bridge arm module to be turned on, and N upper switching transistors of the bridge arm module to be all turned off, to cause the inductive element to charge the power battery.

Optionally, when the charging system operates in a precharging mode, the controller controls the on/off state of the switch component, to cause the bridge arm module and the inductive element to form a precharge circuit.

Optionally, that the controller controls the on/off state of the switch component when the charging system operates in the precharging mode, to cause the bridge arm module and the inductive element to form the precharge circuit includes:
in a first stage, the controller controls the sixth contactor, the fourth contactor, and the fifth contactor to be all closed, the first contactor, the second contactor, the third contactor, and the seventh contactor to be all opened, at least one lower switching transistor of the bridge arm module to be turned on, and N upper switching transistors of the bridge arm module to be all turned off, to cause the direct current power supply to charge the inductive element.

In a second stage, the controller controls the sixth contactor, the fourth contactor, and the fifth contactor to be all closed, the first contactor, the second contactor, the third contactor, and the seventh contactor to be all opened, at least one upper switching transistor of the bridge arm module to be turned on, and N lower switching transistors of the bridge arm module to be all turned off, to cause the direct current power supply and the inductive element to charge the precharge capacitor.

According to a second aspect of embodiments of the present disclosure, a charging control method is provided. The method includes:
determining a target charging mode from preset charging modes based on an output voltage of a power supply apparatus and a battery voltage of a power battery, wherein the preset charging modes include at least one of the following: a boost charging mode, a buck charging mode, and a direct charging mode; and
controlling a switch component and an energy storage module according to the target charging mode, to charge the power battery via the power supply apparatus and/or the energy storage module.

According to a third aspect of embodiments of the present disclosure, a controller is provided, including:
a memory, wherein the memory stores a computer program; and
a processor, configured to execute the computer program in the memory to perform the steps of the method according to the second aspect of embodiments of the present disclosure.

According to a fourth aspect of embodiments of the present disclosure, a vehicle is provided. The vehicle includes the controller according to the second aspect of embodiments of the present disclosure or the charging system according to the first aspect of embodiments of the present disclosure.

According to the foregoing technical solutions, the charging system in the present disclosure includes a charging circuit and a controller. The charging circuit is connected to the controller, and the charging circuit includes an inductive element, a bridge arm module, and a switch component. The charging system is configured to charge a power battery. One end of the switch component is configured to connect to a power supply apparatus. The other end of the switch component is electrically connected to a first end of the inductive element. A second end of the inductive element is configured to connect to the power battery via the bridge arm module. The controller controls the switch component and the bridge arm module according to a target charging mode, to charge the power battery via the power supply apparatus and/or the inductive element. The target charging mode includes at least one of the following: a boost charging mode, a buck charging mode, and a direct charging mode. The present disclosure reuses the existing inductive element and bridge arm module of the vehicle to precharge the precharge capacitor and charge the power battery according to the target charging mode, thereby achieving compatibility with power supply apparatuses having different voltages without incorporating additional circuit structures.

Additional aspects and advantages of the present disclosure are set forth in part in the following description, and in part become apparent from the following description, or may be learned by practice of the present disclosure.

### BRIEF DESCRIPTION OF DRAWINGS

The foregoing and/or additional aspects and advantages of the present disclosure become apparent and readily understood from the following description of embodiments with reference to the accompanying drawings:
FIG. 1 is a block diagram of a charging system according to an example embodiment;
FIG. 2 is a block diagram of another charging system according to an example embodiment;
FIG. 3 is a diagram of a charging system according to an example embodiment;
FIG. 4 is a diagram of a charging current flow direction according to an example embodiment;
FIG. 5 is a diagram of another charging current flow direction according to an example embodiment;
FIG. 6 is a diagram of another charging current flow direction according to an example embodiment;
FIG. 7 is a diagram of another charging current flow direction according to an example embodiment;
FIG. 8 is a diagram of another charging current flow direction according to an example embodiment;
FIG. 9 is a diagram of another charging current flow direction according to an example embodiment;
FIG. 10 is a diagram of another charging current flow direction according to an example embodiment;
FIG. 11 is a diagram of another charging current flow direction according to an example embodiment;
FIG. 12 is a diagram of another charging current flow direction according to an example embodiment;
FIG. 13 is a diagram of another charging current flow direction according to an example embodiment;
FIG. 14 is a diagram of a structure of a charging system according to an example embodiment;
FIG. 15 is a diagram of a structure of another charging system according to an example embodiment;
FIG. 16 is a diagram of another charging current flow direction according to an example embodiment;
FIG. 17 is a diagram of another charging current flow direction according to an example embodiment;
FIG. 18 is a diagram of another charging current flow direction according to an example embodiment;
FIG. 19 is a diagram of another charging current flow direction according to an example embodiment;
FIG. 20 is a diagram of another charging current flow direction according to an example embodiment;
FIG. 21 is a diagram of another charging current flow direction according to an example embodiment;
FIG. 22 is a diagram of another charging current flow direction according to an example embodiment;
FIG. 23 is a diagram of another charging current flow direction according to an example embodiment;
FIG. 24 is a diagram of a structure of another charging system according to an example embodiment;
FIG. 25 is a diagram of a structure of another charging system according to an example embodiment;
FIG. 26 is a diagram of a charging current flow direction according to an example embodiment;
FIG. 27 is a diagram of another charging current flow direction according to an example embodiment;
FIG. 28 is a diagram of another charging current flow direction according to an example embodiment;
FIG. 29 is a diagram of another charging current flow direction according to an example embodiment;
FIG. 30 is a diagram of another charging current flow direction according to an example embodiment;
FIG. 31 is a diagram of another charging current flow direction according to an example embodiment;
FIG. 32 is a diagram of another charging current flow direction according to an example embodiment;
FIG. 33 is a flowchart of a charging control method according to an example embodiment;
FIG. 34 is a flowchart of another charging control method according to an example embodiment;
FIG. 35 is a flowchart of another charging control method according to an example embodiment;
FIG. 36 is a flowchart of another charging control method according to an example embodiment;
FIG. 37 is a flowchart of another charging control method according to an example embodiment;
FIG. 38 is a block diagram of a controller according to an example embodiment;
FIG. 39 is a block diagram of a vehicle according to an example embodiment; and
FIG. 40 is a block diagram of another vehicle according to an example embodiment.

### DESCRIPTION OF EMBODIMENTS

Embodiments of the present disclosure are described in detail below, examples of which are shown in the accompanying drawings, where same or similar reference numerals throughout represent same or similar components or components having same or similar functions. The embodiments described below with reference to the accompanying drawings are provided as examples to explain the present disclosure, and will not be construed as a limitation on the present disclosure.

The inventors have recognized that as the voltage ranges of power batteries across different electric vehicle models become increasingly broad, the power required for charging varies significantly. Due to differences in the output capabilities of charging piles from different manufacturers, some high-voltage vehicles cannot be charged at charging piles with low output voltages, or charging piles with high output voltages cannot charge low-voltage electric vehicles at maximum output power.

Upon further investigation, the inventors have identified that most manufacturers employ direct charging schemes, while some manufacturers use boost charging schemes to achieve compatibility with charging piles having low output voltages. However, buck charging functions are rarely implemented. Consequently, charging piles with high output voltages cannot effectively charge low-voltage electric vehicles because the high-voltage charging piles provide low output power and cannot maximize their output.

Upon further in-depth investigation, the inventors have inventively recognized that seamless switching between buck charging and boost charging cannot be achieved in the very few existing system structures capable of both boost charging and buck charging. This is because the current flow direction in circuit loops of such structures during boost charging is opposite to that during buck charging. Therefore, during switching from boost charging to buck charging or from buck charging to boost charging, an energy release process is required, and the switching can only be implemented after electrical energy has been released. This not only results in a waste of electrical energy, but also leads to increased charging costs, a prolonged charging time, and ultimately a poor charging experience for users.

In the related art, an additional buck-boost circuit needs to be incorporated to implement boost charging or buck charging, and an additional precharge branch and corresponding components also need to be incorporated to precharge a precharge capacitor via a power battery, resulting in high circuit complexity and increased manufacturing costs.

The present disclosure reuses an existing inductive element and bridge arm module of a vehicle to precharge a precharge capacitor and charge a power battery according to a target charging mode, thereby achieving compatibility with power supply apparatuses having different voltages without incorporating additional circuit structures. In addition, the precharge capacitor is precharged via a power supply apparatus, eliminating the need for an additional precharge branch. As a result, a circuit structure is simplified, and manufacturing costs are reduced.

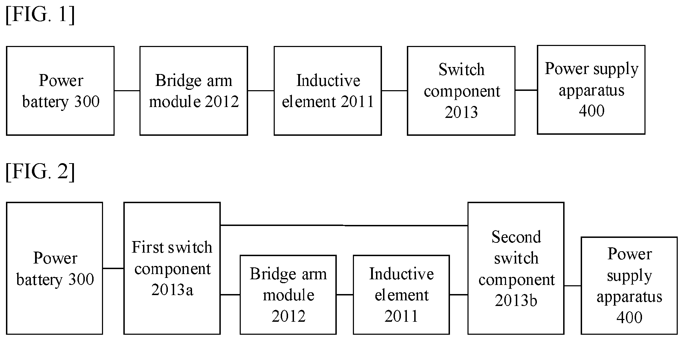

FIG. 1 is a block diagram of a charging system according to an example embodiment. As shown in FIG. 1, the charging system 200 includes a charging circuit 201 and a controller 202. The charging circuit 201 is connected to the controller 202, and the charging circuit 201 includes an inductive element 2011, a bridge arm module 2012, and a switch component 2013. The charging system 200 is configured to charge a power battery 300.

One end of the switch component 2013 is configured to connect to a power supply apparatus 400. The other end of the switch component 2013 is connected to a first end of the inductive element 2011. A second end of the inductive element 2011 is configured to connect to the power battery 300 via the bridge arm module 2012.

The controller 202 is configured to control the switch component 2013 and the bridge arm module 2012 according to a target charging mode, to charge the power battery 300 via the power supply apparatus 400 and/or the inductive element 2011. The target charging mode includes at least one of the following: a boost charging mode, a buck charging mode, and a direct charging mode.

For example, the power supply apparatus 400 in the present disclosure may be a charging pile or a direct current power supply, such as a battery. This is not specifically limited in the present disclosure. The present disclosure is applicable to the charging circuit 201. The charging circuit 201 may include a precharge capacitor, the switch component 2013, the inductive element 2011, and the bridge arm module 2012. The precharge capacitor may be connected in parallel to the power battery 300. The one end of the switch component 2013 is configured to connect to the power supply apparatus 400. The other end of the switch component 2013 is electrically connected to the first end of the inductive element 2011. The second end of the inductive element 2011 is configured to connect to the power battery 300 via the bridge arm module 2012. The bridge arm module 2012 may be a three-phase inverter circuit in a motor controller 202, and the inductive element 2011 may be an inductor in a motor, thereby achieving functional reuse of the motor controller 202 and a motor. As a result, a circuit structure is simplified, and manufacturing costs are reduced.

In some embodiments, an output voltage of the power supply apparatus 400 and a battery voltage of the power battery 300 may not be necessarily consistent. Therefore, after the power supply apparatus 400 is connected to the charging circuit 201, a corresponding target charging mode may be first determined from preset charging modes based on a magnitude relationship between the output voltage of the power supply apparatus 400 and the battery voltage of the power battery 300. The preset charging modes may include at least one of the following: a boost charging mode, a buck charging mode, and a direct charging mode.

In some other embodiments, when the output voltage of the power supply apparatus 400 is less than the battery voltage of the power battery 300, the boost charging mode may be used as the target charging mode; when the output voltage of the power supply apparatus 400 is greater than the battery voltage of the power battery 300, and a difference between the output voltage and the battery voltage is greater than a first preset voltage threshold and less than a second preset voltage threshold, the direct charging mode may be used as the target charging mode; and when the output voltage of the power supply apparatus 400 is greater than the battery voltage of the power battery 300, and the difference between the output voltage and the battery voltage is greater than the second preset voltage threshold, the buck charging mode may be used as the target charging mode.

In some other embodiments, when the target charging mode is the boost charging mode, the power battery 300 may be jointly charged via the power supply apparatus 400 and the inductive element 2011, to implement boost charging of the power battery 300; when the target charging mode is the buck charging mode, the power battery 300 may be charged via the inductive element 2011, to implement buck charging of the power battery 300; and when the target charging mode is the direct charging mode, the power battery 300 may be charged via the power supply apparatus 400, to implement direct charging of the power battery 300.

In this way, when the output voltage of the power supply apparatus 400 is less than a charging voltage of the power battery 300, the power battery 300 may be boost-charged in the boost charging mode; when the output voltage of the power supply apparatus 400 is greater than the charging voltage of the power battery 300, the power battery 300 may be buck-charged in the buck charging mode, so that the power supply apparatus 400 can maximize its output power, thereby reducing charging time; and when the output voltage of the power supply apparatus 400 is equal to the charging voltage of the power battery 300, the power battery 300 may be directly charged in the direct charging mode, thereby achieving compatibility with power supply apparatuses 400 having different voltages, and improving charging flexibility and adaptability between the power battery 300 and the power supply apparatus 400.

In some embodiments, an output voltage of the power supply apparatus 400 and a battery voltage of the power battery 300 may not be necessarily consistent. Therefore, after the power supply apparatus 400 is connected to the charging circuit 201, a corresponding target charging mode may be first determined from preset charging modes based on a magnitude relationship between the output voltage of the power supply apparatus 400 and the battery voltage of the power battery 300. The preset charging modes may include at least one of the following: a boost charging mode, a buck charging mode, and a direct charging mode.

In some other embodiments, when the output voltage of the power supply apparatus 400 is less than the battery voltage of the power battery 300, the boost charging mode may be used as the target charging mode; when the output voltage of the power supply apparatus 400 is greater than the battery voltage of the power battery 300, and a difference between the output voltage and the battery voltage is greater than a first preset voltage threshold and less than a second preset voltage threshold, the direct charging mode may be used as the target charging mode; and when the output voltage of the power supply apparatus 400 is greater than the battery voltage of the power battery 300, and the difference between the output voltage and the battery voltage is greater than the second preset voltage threshold, the buck charging mode may be used as the target charging mode.

FIG. 2 is a block diagram of another charging system according to an example embodiment. As shown in FIG. 2, the switch component 2013 includes a first switch component 2013a and a second switch component 2013b.

The power battery 300 is configured to connect to the power supply apparatus 400 via the first switch component 2013a and the second switch component 2013b. The power battery 300 is further configured to connect to the bridge arm module 2012 via the first switch component 2013a. The inductive element 2011 is configured to connect to the power supply apparatus 400 via the second switch component 2013b.

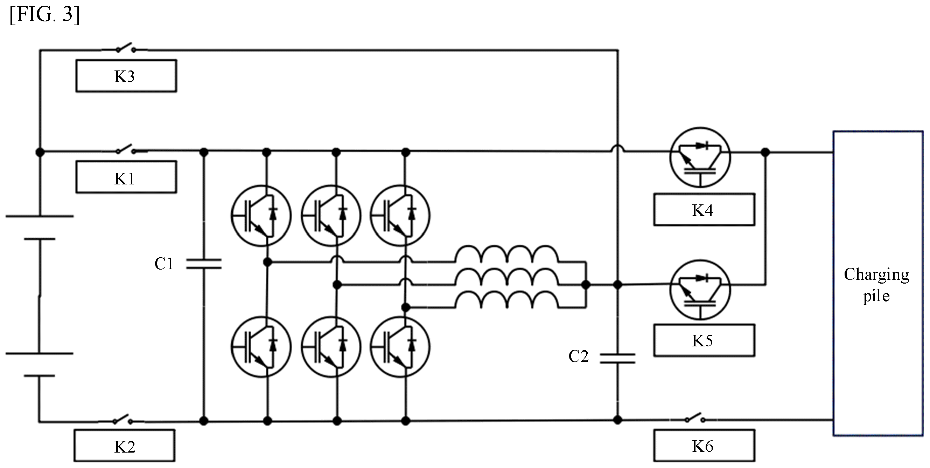

FIG. 3 is a diagram of a charging system according to an example embodiment. As shown in FIG. 3, the charging circuit 201 may further include a precharge capacitor C1. A first end of the precharge capacitor C1 is connected to an upper bridge arm of the bridge arm module 2012. A second end of the precharge capacitor C1 is connected to a lower bridge arm of the bridge arm module 2012. A bridge arm midpoint of the bridge arm module 2012 is connected to the first end of the inductive element 2011. The second end of the inductive element 2011 is connected to the second switch component 2013b. The upper bridge arm of the bridge arm module 2012 is further connected to the second switch component 2013b. The lower bridge arm of the bridge arm module 2012 is further connected to the second switch component 2013b.

The bridge arm midpoint will be understood as a point of connection between a switching transistor of the upper bridge arm of the bridge arm module and a switching transistor of the lower bridge arm of the bridge arm module. The bridge arm module 2012 may be a circuit in a motor controller, and the inductive element 2011 may be an inductive element 2011 in a motor, thereby achieving functional reuse of the motor controller and a motor module. As a result, a circuit structure is simplified, and manufacturing costs are reduced.

The controller 202 is configured to control the switch component 2013 and the bridge arm module 2012 according to the target charging mode, to precharge the precharge capacitor C1 via the power supply apparatus 400 and/or the inductive element 2011.

For example, different charging modes correspond to different switch states in the charging circuit, and the switch states include states of switches in the switch component 2013 and states of switches in the bridge arm module 2012. After the target charging mode is determined, the states of the switches in the switch component 2013 and the states of the switches in the bridge arm module 2012 may be controlled according to the target charging mode, to precharge the precharge capacitor C1 via the power supply apparatus 400 and/or the inductive element 2011.

In some other embodiments, when the target charging mode is the boost charging mode, the precharge capacitor C1 may be jointly precharged via the power supply apparatus 400 and the inductive element 2011, to implement boost precharging of the precharge capacitor C1; when the target charging mode is the buck charging mode, the precharge capacitor C1 may be precharged via the inductive element 2011, to implement buck precharging of the precharge capacitor C1; and when the target charging mode is the direct charging mode, the precharge capacitor C1 may be precharged via the power supply apparatus 400, to implement direct precharging of the precharge capacitor C1.

As shown in FIG. 3, the charging circuit 201 further includes a filter capacitor C2.

One end of the filter capacitor C2 is connected to the bridge arm module 2011. The other end of the filter capacitor C2 is connected to the inductive element 2011.

The filter capacitor C2 can reduce a ripple voltage output by the power supply apparatus 400, thereby achieving voltage stabilization.

As shown in FIG. 3, taking a case in which the power supply apparatus 400 is a charging pile as an example, the first switch component 2013a includes a first switch K1, a second switch K2, and a third switch K3; and the second switch component 2013b includes a fourth switch K4, a fifth switch K5, and a sixth switch K6.

A first end of the first contactor K1 is configured to connect to a first end of the power battery 300. A second end of the first contactor K1 is connected to the first end of the precharge capacitor C1.

A first end of the second contactor K2 is configured to connect to a second end of the power battery 300. A second end of the second contactor K2 is connected to the second end of the precharge capacitor C1.

A first end of the third contactor K3 is configured to connect to the first end of the power battery 300. A second end of the third contactor K3 is connected to the second end of the inductive element 2011.

A first end of the first switching transistor K4 is connected to the upper bridge arm of the bridge arm module 2012. A second end of the first switching transistor K4 is configured to connect to a first end of the power supply apparatus 400.

A first end of the second switching transistor K5 is connected to the lower bridge arm of the bridge arm module 2012. A second end of the second switching transistor K5 is configured to connect to a second end of the power supply apparatus 400.

A first end of the fourth contactor K6 is connected to the second end of the inductive element 2011. A second end of the fourth contactor K6 is configured to connect to the first end of the power supply apparatus 400.

For example, the first contactor K1, the second contactor K2, the third contactor K3, and the second switching transistor K5 may be contactors, and the first switching transistor K4 and the fourth contactor K6 may be switching transistors, thereby implementing highfrequency control of the first switching transistor K4 and the fourth contactor K6.

In the related art, a precharge resistor and a contactor are connected in parallel to a first contactor K1, and a power battery precharges a precharge capacitor via a branch in which the precharge resistor and the contactor are located. In embodiments of the present disclosure, the precharge capacitor in the related art may be replaced by the precharge capacitor C1 to simplify the circuit and reduce costs, or the precharge capacitor in the related art may be retained as a redundant circuit design to improve reliability of the charging system.

According to some embodiments of the present disclosure, the controller 202 is specifically configured to:
turn on the second switching transistor K5, close the fourth contactor K6, open the first contactor K1, the second contactor K2, and the third contactor K3, and turn off the first switching transistor K4; and
periodically control a switching transistor of the upper bridge arm of the bridge arm module 2012 and a switching transistor of the lower bridge arm of the bridge arm module 2012 to be alternately turned on, to perform boost precharging on the precharge capacitor C1 according to the boost charging mode.

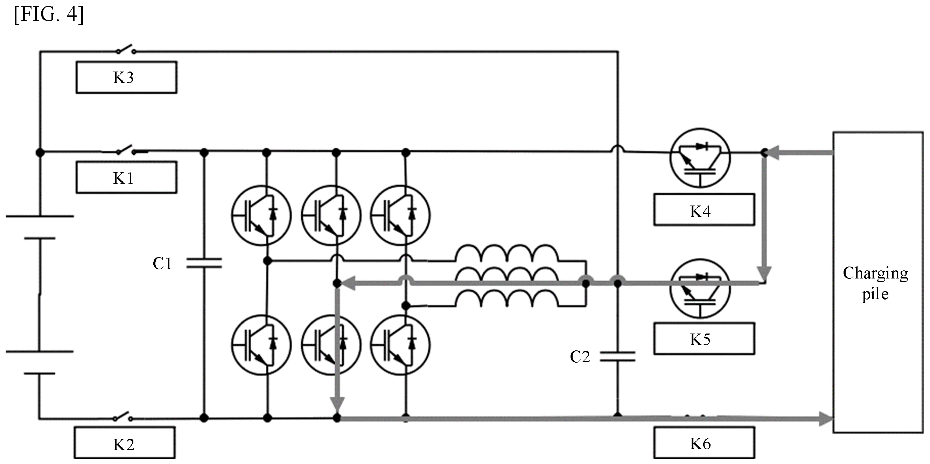

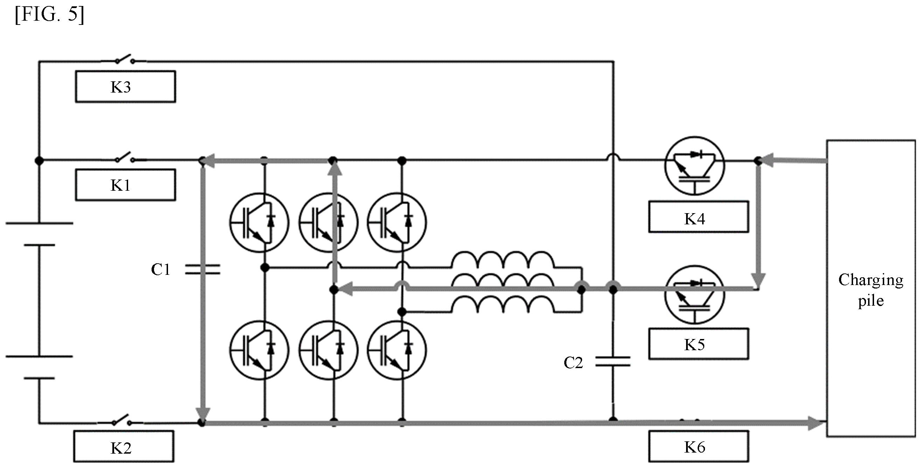

For example, when the target charging mode is the boost charging mode, as shown in FIG. 4, in step 1, the second switching transistor K5 may be turned on, the fourth contactor K6 may be closed, the switching transistor of the lower bridge arm of the bridge arm module 2012 may be turned on, the first contactor K1, the second contactor K2, and the third contactor K3 may be opened, and the first switching transistor K4 and the switching transistor of the upper bridge arm of the bridge arm module 2012 may be turned off, to charge the inductive element 2011 via the power supply apparatus 400. As shown in FIG. 5, in step 2, the second switching transistor K5 may be maintained on, the fourth contactor K6 may be maintained closed, the first contactor K1, the second contactor K2, and the third contactor K3 may be maintained open, the first switching transistor K4 may be maintained off, the switching transistor of the lower bridge arm of the bridge arm module 2012 may be turned off, and the switching transistor of the upper bridge arm of the bridge arm module 2012 may be turned on, to charge the precharge capacitor C1 via the power supply apparatus 400 and the inductive element 2011 simultaneously by utilizing the freewheeling effect of the inductive element 2011, thereby implementing boost precharging of the precharge capacitor C1.

In some embodiments, step 1 and step 2 may be periodically repeated. That is, the second switching transistor K5 may be maintained on, the fourth contactor K6 may be maintained closed, the first contactor K1, the second contactor K2, and the third contactor K3 may be maintained open, and the first switching transistor K4 may be maintained off; and the switching transistor of the upper bridge arm of the bridge arm module 2012 and the switching transistor of the lower bridge arm of the bridge arm module 2012 may be periodically controlled to be alternately turned on, to continuously perform boost precharging on the precharge capacitor C1 according to the boost charging mode.

According to some other embodiments of the present disclosure, the controller 202 is specifically configured to:
close the first contactor K1, the second contactor K2, and the fourth contactor K6, turn on the second switching transistor K5, open the third contactor K3, and turn off the first switching transistor K4; and
periodically control the upper switching transistor and the lower switching transistor of the bridge arm module 2012 to be alternately turned on, to perform boost charging on the power battery 300 according to the boost charging mode.

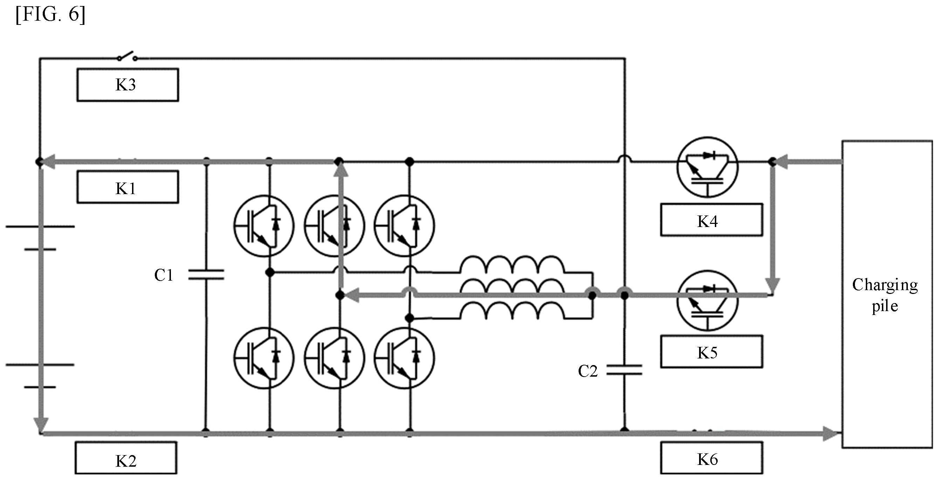

For example, when the target charging mode is the boost charging mode, as shown in FIG. 4, in step 1, the first contactor K1 and the second contactor K2 may be closed, the second switching transistor K5 may be turned on, the fourth contactor K6 may be closed, the switching transistor of the lower bridge arm of the bridge arm module 2012 may be turned on, the third contactor K3 may be opened, and the first switching transistor K4 and the switching transistor of the upper bridge arm of the bridge arm module 2012 may be turned off, to charge the inductive element 2011 via the power supply apparatus 400. As shown in FIG. 6, in step 2, the first contactor K1 and the second contactor K2 may be maintained closed, the second switching transistor K5 may be maintained on, the fourth contactor K6 may be maintained closed, the third contactor K3 may be maintained open, the first switching transistor K4 may be maintained off, the switching transistor of the lower bridge arm of the bridge arm module 2012 may be turned off, and the switching transistor of the upper bridge arm of the bridge arm module 2012 may be turned on, to charge the power battery 300 via the power supply apparatus 400 and the inductive element 2011 simultaneously by utilizing the freewheeling effect of the inductive element 2011, thereby implementing boost charging of the power battery 300.

In some embodiments, step 1 and step 2 may be periodically repeated. That is, the first contactor K1 and the second contactor K2 may be maintained closed, the second switching transistor K5 may be maintained on, the fourth contactor K6 may be maintained closed, the third contactor K3 may be maintained open, and the first switching transistor K4 may be maintained off; and the switching transistor of the upper bridge arm of the bridge arm module 2012 and the switching transistor of the lower bridge arm of the bridge arm module 2012 may be periodically controlled to be alternately turned on, to continuously perform boost charging on the power battery 300 according to the boost charging mode.

According to some other embodiments of the present disclosure, the controller 202 is specifically configured to:
turn on the second switching transistor K5 and the switching transistor of the upper bridge arm of the bridge arm module 2012, open the first contactor K1, the second contactor K2, and the third contactor K3, and turn off the first switching transistor K4 and the switching transistor of the lower bridge arm of the bridge arm module 2012; and
periodically close the fourth contactor K6 to perform buck precharging on the precharge capacitor C1 according to the buck charging mode.

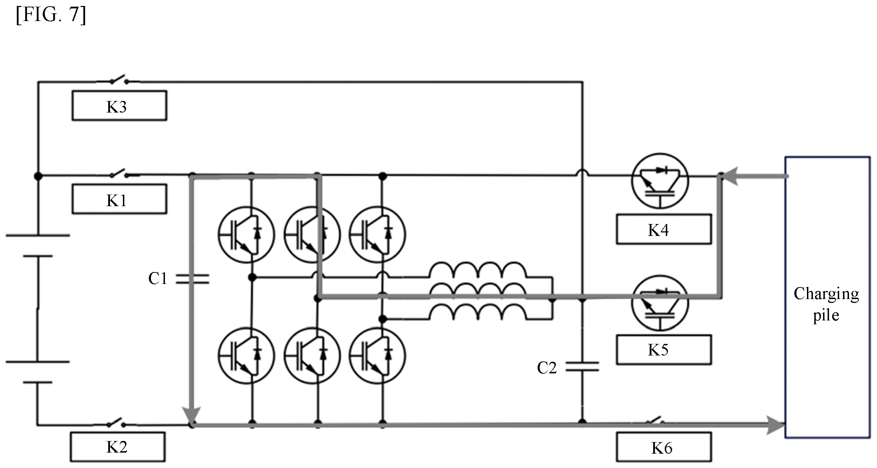

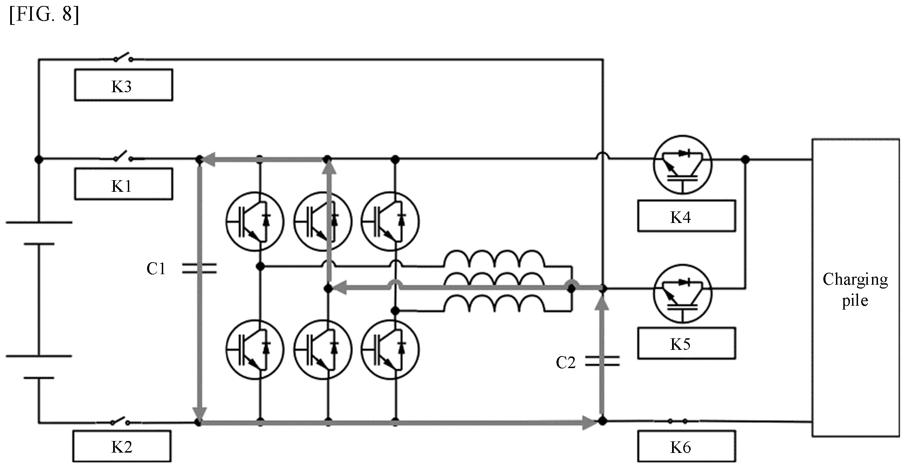

For example, when the target charging mode is the buck charging mode, as shown in FIG. 7, in step 1, the second switching transistor K5 is turned on, the fourth contactor K6 is closed, the switching transistor of the upper bridge arm of the bridge arm module 2012 is turned on, the first contactor K1, the second contactor K2, and the third contactor K3 are opened, and the first switching transistor K4 and the switching transistor of the lower bridge arm of the bridge arm module 2012 are turned off, to charge the inductive element 2011 and the precharge capacitor C1 in series via the power supply apparatus 400. As shown in FIG. 4, in step 1, alternatively, the second switching transistor K5 may be turned on, the fourth contactor K6 may be closed, the switching transistor of the lower bridge arm of the bridge arm module 2012 may be turned on, the first contactor K1, the second contactor K2, and the third contactor K3 may be opened, and the first switching transistor K4 and the switching transistor of the upper bridge arm of the bridge arm module 2012 may be turned off, to charge the inductive element 2011 via the power supply apparatus 400. As shown in FIG. 8, in step 2, the second switching transistor K5 and the switching transistor of the upper bridge arm of the bridge arm module 2012 may be maintained on, the first contactor K1, the second contactor K2, and the third contactor K3 may be maintained open, the first switching transistor K4 and the switching transistor of the lower bridge arm of the bridge arm module 2012 may be maintained off, and the fourth contactor K6 may be opened, to charge the precharge capacitor C1 via the inductive element 2011 by utilizing the freewheeling effect of the inductive element 2011, thereby implementing buck precharging of the precharge capacitor C1.

In some embodiments, step 1 and step 2 may be periodically repeated. Taking the circuit shown in FIG. 7 as an example for step 1, the second switching transistor K5 and the switching transistor of the upper bridge arm of the bridge arm module 2012 may be maintained on, the first contactor K1, the second contactor K2, and the third contactor K3 may be maintained open, the first switching transistor K4 and the switching transistor of the lower bridge arm of the bridge arm module 2012 may be maintained off, and the fourth contactor K6 may be periodically closed, to continuously perform buck precharging on the precharge capacitor C1 according to the buck charging mode.

According to some other embodiments of the present disclosure, the controller 202 is specifically configured to:
close the second contactor K2 and the third contactor K3, turn on the first switching transistor K4 and the second switching transistor K5, and open the first contactor K1 and the fourth contactor K6; and
periodically control the switching transistor of the upper bridge arm of the bridge arm module 2012 and the switching transistor of the lower bridge arm of the bridge arm module 2012 to be alternately turned on, to perform buck charging on the power battery 300 according to the buck charging mode.

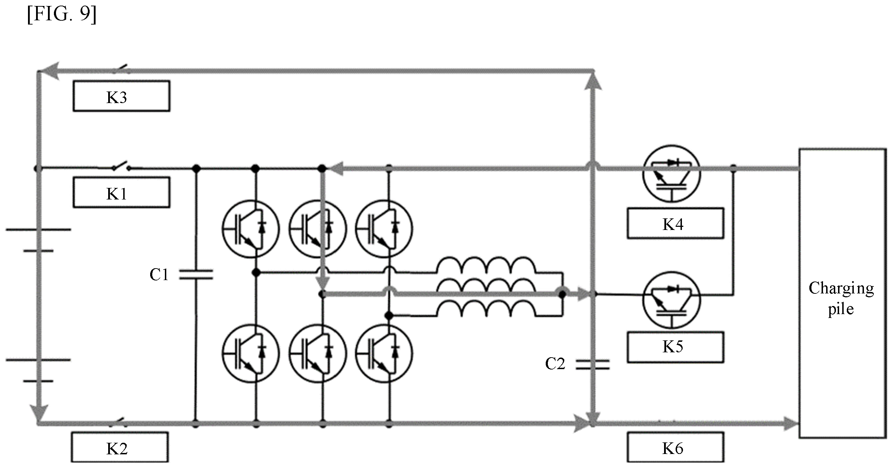

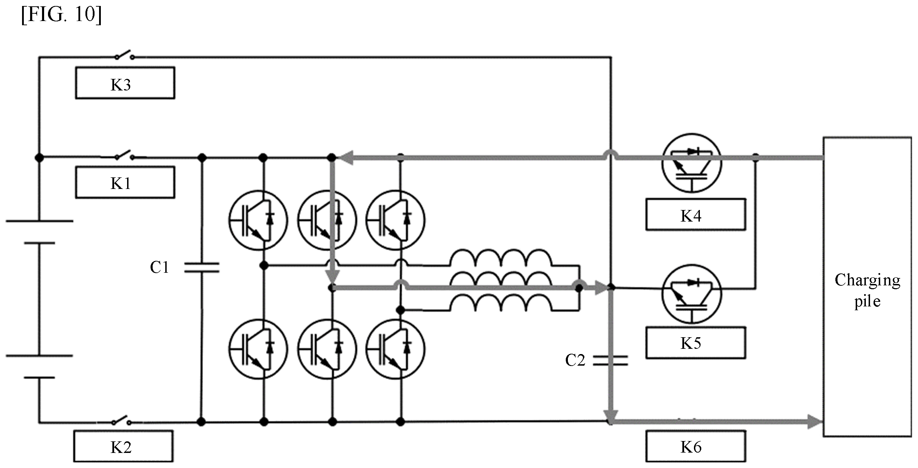

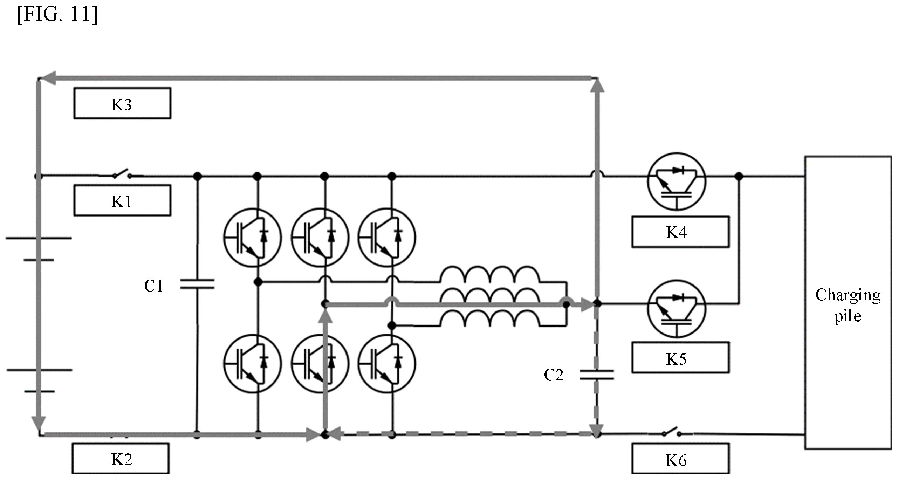

For example, when the target charging mode is the buck charging mode, as shown in FIG. 9, in step 1, the second contactor K2 and the third contactor K3 may be closed, the first switching transistor K4, the second switching transistor K5, and the switching transistor of the upper bridge arm of the bridge arm module 2012 may be turned on, the first contactor K1 and the fourth contactor K6 may be opened, and the switching transistor of the lower bridge arm of the bridge arm module 2012 may be turned off, to charge the inductive element 2011 and the power battery 300 in series via the power supply apparatus 400. As shown in FIG. 10, in step 1, alternatively, the first switching transistor K4, the second switching transistor K5, and the switching transistor of the upper bridge arm of the bridge arm module 2012 may be turned on, the first contactor K1, the second contactor K2, the third contactor K3, and the fourth contactor K6 may be opened, and the switching transistor of the lower bridge arm of the bridge arm module 2012 may be turned off, to charge the inductive element 2011 via the power supply apparatus 400. As shown in FIG. 11, in step 2, the second contactor K2 and the third contactor K3 may be maintained closed, the first switching transistor K4 and the second switching transistor K5 may be maintained on, the first contactor K1 and the fourth contactor K6 may be maintained open, the switching transistor of the upper bridge arm of the bridge arm module 2012 may be turned off, and the switching transistor of the lower bridge arm of the bridge arm module 2012 may be turned on, to charge the power battery 300 via the inductive element 2011 by utilizing the freewheeling effect of the inductive element 2011, thereby implementing buck charging of the power battery 300.

In some embodiments, step 1 and step 2 may be periodically repeated. Taking the circuit shown in FIG. 9 as an example for step 1, the second contactor K2 and the third contactor K3 may be maintained closed, the first switching transistor K4 and the second switching transistor K5 may be maintained on, and the first contactor K1 and the fourth contactor K6 may be maintained open; and the switching transistor of the upper bridge arm of the bridge arm module 2012 and the switching transistor of the lower bridge arm of the bridge arm module 2012 may be periodically controlled to be alternately turned on, to continuously perform buck charging on the power battery 300 according to the buck charging mode.

According to some other embodiments of the present disclosure, the controller 202 is specifically configured to:
turn on the second switching transistor K5, open the first contactor K1, the second contactor K2, the third contactor K3, and the fourth contactor K6, and turn off the switching transistor of the upper bridge arm of the bridge arm module 2012 and the switching transistor of the lower bridge arm of the bridge arm module 2012; and
periodically turn on the first switching transistor K4 to perform direct precharging on the precharge capacitor C1 according to the direct charging mode.

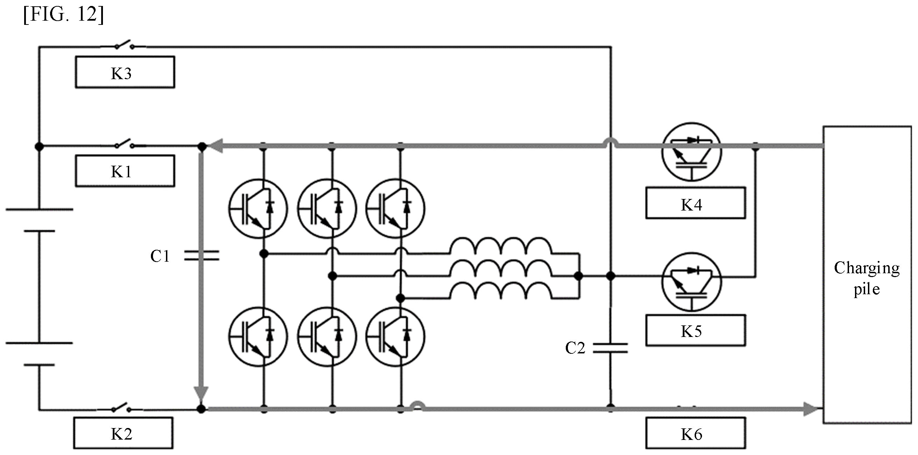

For example, when the target charging mode is the direct charging mode, as shown in FIG. 12, in step 1, the second switching transistor K5 may be turned on, the first contactor K1, the second contactor K2, and the third contactor K3 may be opened, the first switching transistor K4 may be turned off, the fourth contactor K6 may be opened, and the switching transistor of the upper bridge arm of the bridge arm module 2012 and the switching transistor of the lower bridge arm of the bridge arm module 2012 may be turned off; and in step 2, the second switching transistor K5 may be maintained on, the first contactor K1, the second contactor K2, the third contactor K3, and the fourth contactor K6 may be maintained open, the switching transistor of the upper bridge arm of the bridge arm module 2012 and the switching transistor of the lower bridge arm of the bridge arm module 2012 may be maintained off, and the first switching transistor K4 may be turned on.

In some embodiments, step 1 and step 2 may be periodically repeated. That is, the second switching transistor K5 may be maintained on, the first contactor K1, the second contactor K2, the third contactor K3, and the fourth contactor K6 may be maintained open, and the switching transistor of the upper bridge arm of the bridge arm module 2012 and the switching transistor of the lower bridge arm of the bridge arm module 2012 may be maintained off; and the first switching transistor K4 may be periodically turned on. A preset voltage range may be a relatively small voltage range. The output voltage may be considered stable when the output voltage fluctuates within the preset voltage range. Consequently, direct precharging is performed on the precharge capacitor C1 according to the direct charging mode, to prevent a current output by the power supply apparatus 400 from being excessively large and damaging the precharge capacitor C1.

According to some other embodiments of the present disclosure, the controller 202 is specifically configured to:
close the first contactor K1 and the second contactor K2, turn on the second switching transistor K5, open the third contactor K3 and the fourth contactor K6, and turn off the switching transistor of the upper bridge arm of the bridge arm module 2012 and the switching transistor of the lower bridge arm of the bridge arm module 2012; and
periodically turn on the first switching transistor K4, and after the output voltage of the power supply apparatus remains within the preset voltage range, maintain the first switching transistor K4 on to perform direct charging on the power battery 300 according to the direct charging mode.

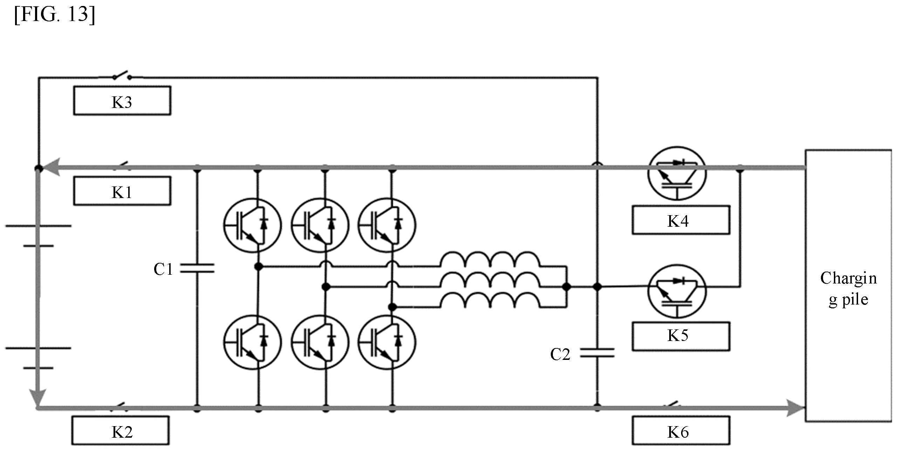

For example, when the target charging mode is the direct charging mode, as shown in FIG. 13, in step 1, the first contactor K1 and the second contactor K2 may be closed, the second switching transistor K5 may be turned on, the third contactor K3 may be opened, the first switching transistor K4 may be turned off, the fourth contactor K6 may be opened, and the switching transistor of the upper bridge arm of the bridge arm module 2012 and the switching transistor of the lower bridge arm of the bridge arm module 2012 may be turned off; and in step 2, the first contactor K1 and the second contactor K2 may be maintained closed, the second switching transistor K5 may be maintained on, the third contactor K3 and the fourth contactor K6 may be maintained open, the switching transistor of the upper bridge arm of the bridge arm module 2012 and the switching transistor of the lower bridge arm of the bridge arm module 2012 may be maintained off, and the first switching transistor K4 may be turned on.

In some embodiments, step 1 and step 2 may be periodically repeated. That is, the first contactor K1 and the second contactor K2 may be maintained closed, the second switching transistor K5 may be maintained on, the third contactor K3 and the fourth contactor K6 may be maintained open, and the switching transistor of the upper bridge arm of the bridge arm module 2012 and the switching transistor of the lower bridge arm of the bridge arm module 2012 may be maintained off; and the first switching transistor K4 may be periodically turned on, and after the output voltage of the power supply apparatus 400 stabilizes within the preset voltage range, the first switching transistor K4 may be controlled to be maintained on. Consequently, direct charging is performed on the power battery 300 according to the direct charging mode, to prevent the current output by the power supply apparatus 400 from being excessively large and damaging the power battery 300.

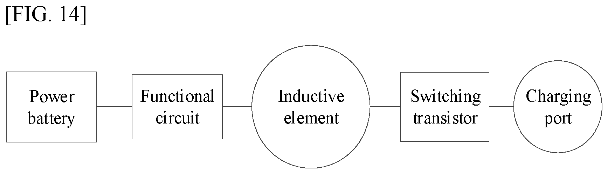

FIG. 14 is a diagram of a circuit structure of a charging system according to an embodiment of the present invention. One end of a switching transistor is configured to electrically connect to a charging port. The other end of the switching transistor is electrically connected to a first end of an inductive element. It will be noted that the charging port is a direct current charging port connected to a direct current charging pile. Since electric vehicles currently support direct current charging, direct current charging is generally implemented using a charging pile. In embodiments of the present invention, electrical energy received at the charging port uniformly refers to electrical energy in the form of direct current.

An inductive element and a bridge arm module may be existing structures of an electric vehicle. For example, the inductive element may be a motor winding, and the bridge arm module may be a motor control circuit. Currently, conventional motors in electric vehicles generally include a drive motor and a refrigeration system motor (generally, an air conditioning motor). Regardless of the types of the motors, motor control circuits of the motors are of substantially the same structure, which includes a metal-oxide-semiconductor field-effect transistor (MOS) or an insulated gate bipolar transistor (IGBT). Therefore, any one of the motors and its control circuit may be reused.

In an actual charging process, when boost charging is required (in other words, a voltage of the electrical energy received at the charging port is lower than a voltage of a power battery), that is, the charging system operates in a boost charging mode, the switching transistor is controlled to be turned off, and a boost charging circuit is formed using the inductive element and the bridge arm module, to boost the voltage of the electrical energy received at the charging port and then charge the power battery.

When buck charging is required (in other words, the voltage of the electrical energy received at the charging port is higher than the voltage of the power battery), that is, the charging system operates in a buck charging mode, an operating state of the switching transistor is controlled, and a buck charging circuit is formed using the inductive element and the bridge arm module, to buck the voltage of the electrical energy received at the charging port and then charge the power battery.

It will be naturally understood that in the case of direct charging (in other words, when the voltage of the electrical energy received at the charging port is equal to the voltage of the power battery), that is, when the charging system operates in a direct charging mode, neither boost charging nor buck charging is required, a first switching transistor is controlled to be turned on, and a second switching transistor is controlled to be turned off, causing the electrical energy received at the charging port to be transmitted to the power battery via the inductive element and the bridge arm module and to directly charge the power battery.

It will be noted that, generally, the power battery further needs to be provided with a positive switch and a negative switch, which are simply referred to as a first contactor and a second contactor in embodiments of the present invention. These switches are generally implemented by normally open contacts on the contactors, rather than by switching transistors. During charging of the power battery, the first contactor and the second contactor need to be closed. During precharging of a precharge capacitor, the first contactor and the second contactor need to be opened.

Based on the foregoing circuit structure, a preferred switching transistor structure includes a first switching transistor and a second switching transistor. A first end of the first switching transistor is configured to electrically connect to a first end (namely, a positive terminal) of the charging port. A second end of the first switching transistor is electrically connected to the first end of the inductive element. A first end of the second switching transistor is electrically connected to the first end of the inductive element. A second end of the second switching transistor is configured to electrically connect to a second end (namely, a negative terminal) of the charging port.

Based on the foregoing switching transistor structure, there is another connection relationship: the second end of the first switching transistor is electrically connected to the first end of the second switching transistor, and an electrical connection point is electrically connected to the first end of the inductive element. Both of these two connection configurations are applicable.

The electrical energy received at the charging port may contain ripples, which affects charging efficiency and quality. In view of this, the charging system further includes a filter capacitor. One end of the filter capacitor is electrically connected to the first end of the inductive element. The other end of the filter capacitor is electrically connected to a negative terminal of the bridge arm module. The filter capacitor is configured to filter the electrical power received at the charging port, thereby eliminating the ripples that may exist in the electrical energy, and improving charging efficiency and quality.

In addition, the power battery discharges under driving or similar operating conditions. The switching transistor is turned off under such operating conditions, and electrical energy generated by the power battery may not be transmitted to the charging port to make the charging port live, which would otherwise cause risk of electric shock if a person accidentally touches the charging port or a corresponding position without awareness. In view of this, however, to further improve safety and to avoid, at a hardware level, a situation in which the switching transistor may be turned on due to an error in a control signal or cannot be turned off when damaged, the charging system further includes a first contactor or a second contactor.

One end of the first contactor is electrically connected to a second end of the switching transistor, and the other end of the first contactor is electrically connected to the first end of the inductive element. The first contactor is configured to control opening and closing of a circuit between the second end of the switching transistor and the first end of the inductive element. The first contactor is utilized to distinguish between a driving condition and a charging condition at the hardware level. Under driving or similar operating conditions, the first contactor is opened to prevent the charging port from becoming live when the power battery discharges. This does not cause risk of electric shock even if a person accidentally touches the charging port or the corresponding position without awareness. During charging, the first contactor is closed. Because a charging connector is already plugged into the charging port, the foregoing risk of electric shock is avoided.

If only the second contactor is provided, one end of the second contactor is electrically connected to the negative terminal of the bridge arm module, and the other end of the second contactor is configured to electrically connect to the second end of the charging port; and the second contactor is configured to control opening and closing of a circuit between the charging port and the negative terminal of the bridge arm module. In this way, because the circuit between the power battery and the negative terminal of the charging port can be opened by the second contactor, the problem of the charging port becoming live when the power battery discharges is avoided. Certainly, a more preferable scheme is that both the first contactor and the second contactor are provided in the circuit. This provides double safety assurance. Even when one of the contactors is damaged, it can still be ensured that the charging port does not become live when the power battery discharges.

In addition, if the filter capacitor is provided, one end of the second contactor is electrically connected to the negative terminal of the bridge arm module and the filter capacitor separately, and the other end of the second contactor is electrically connected to the negative terminal of the charging port.

For the two switching transistors, preferably, the first switching transistor includes a first field-effect transistor, and the second switching transistor includes a second field-effect transistor. A first end of the first field-effect transistor is configured to electrically connect to the positive terminal of the charging port. A third end of the first field-effect transistor is configured to receive a first control signal. A second end of the first field-effect transistor is electrically connected to the first end of the inductive element. A first end of the second field-effect transistor is electrically connected to the first end of the inductive element. A third end of the second field-effect transistor is configured to receive a second control signal. A second end of the second field-effect transistor is electrically connected to the second end of the charging port and a negative terminal of the power battery separately.

It will be naturally understood that if the second end of the first field-effect transistor is electrically connected to the first end of the second field-effect transistor, an electrical connection point between the first field-effect transistor and the second field-effect transistor is electrically connected to the first end of the inductive element.

The inductive element includes an N-phase winding, and the bridge arm module includes N bridge arms connected in parallel. To better describe the structures and operation processes of the inductive element and the bridge arm module, the following provides description by using an example in which a motor winding serves as the inductive element and a motor control circuit serves as the bridge arm module.

The motor winding generally includes a three-phase winding. The motor control circuit includes a first bridge arm, a second bridge arm, and a third bridge arm. Respective first ends of the three-phase winding are short-circuited and then connected to the electrical connection point between the two field-effect transistors. A second end of a first winding of the three-phase winding is electrically connected to a midpoint of the first bridge arm. A second end of a second winding of the three-phase winding is electrically connected to a midpoint of the second bridge arm. A second end of a third winding of the three-phase winding is electrically connected to a midpoint of the third bridge arm.

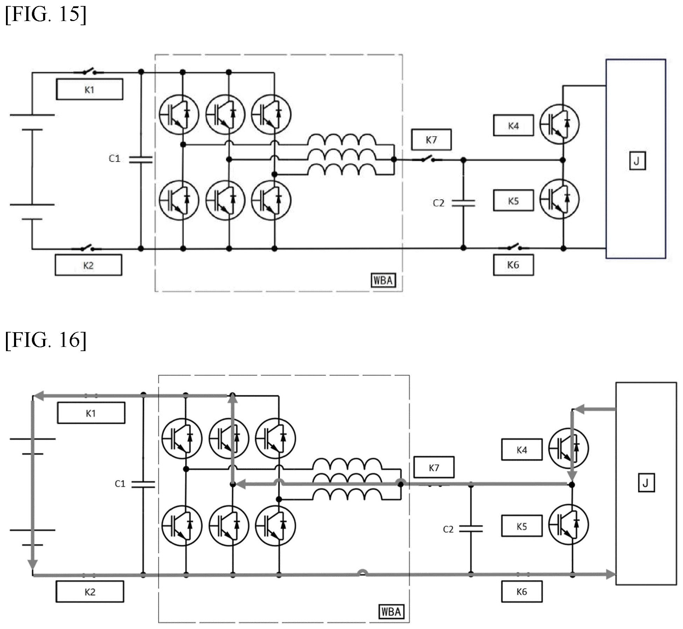

To more clearly describe and illustrate the circuit structure of the foregoing charging system, reference is made to FIG. 15, which is a diagram of a circuit structure of a preferred charging system. FIG. 15 illustrates, by way of example, field-effect transistors of specific structures, a three-phase winding, three bridge arms, and a precharge capacitor C1 and a filter capacitor C2 being included. The charging system includes a first contactor K1 and a second contactor K2 for a power battery, a fourth contactor K6, a first switching transistor K4, a second switching transistor K5, a fifth contactor K7, a charging port J, a power battery 300, a three-phase winding, and three bridge arms WBA.

During direct charging, the first switching transistor K4 is turned on, the first contactor K1 and the second contactor K2 are closed, the second switching transistor K5 is turned off, the fourth contactor K6 and the fifth contactor K7 are closed, respective lower switching transistors of the first bridge arm, the second bridge arm, and the third bridge arm are controlled to be turned off, and an upper switching transistor of at least one bridge arm is controlled to be turned on, causing electrical energy received at the charging port J to be transmitted to the power battery via the three-phase winding and an upper switching transistor of the first bridge arm, the second bridge arm, or the third bridge arm and to directly charge the power battery. For a specific current direction during charging, reference is made to FIG. 16. During direct charging, the three-phase winding is continuously energized and thus can be considered as a three-phase inductor in terms of electrical characteristics. Because the inductor can be considered as a conducting wire when continuously energized, direct charging can be implemented. It will be noted that, during charging in any mode, or during precharging of the precharge capacitor, whether an upper switching transistor or a lower switching transistor of the bridge arm is turned on, it is sufficient to turn on one bridge arm. Certainly, two bridge arms may alternatively be turned on or all of the three bridge arms may alternatively be turned on, with differences lying in performance, such as power, ripple, and the like. For example, turning on all of the three bridge arms yields higher power and efficiency than turning on two bridge arms or one bridge arm. Certainly, turning on the three bridge arms simultaneously produces a larger ripple than turning on the three bridge arms alternately. These can be readily appreciated by a person skilled in the art based on the structures of the motor and its control circuit, and details are not described herein.

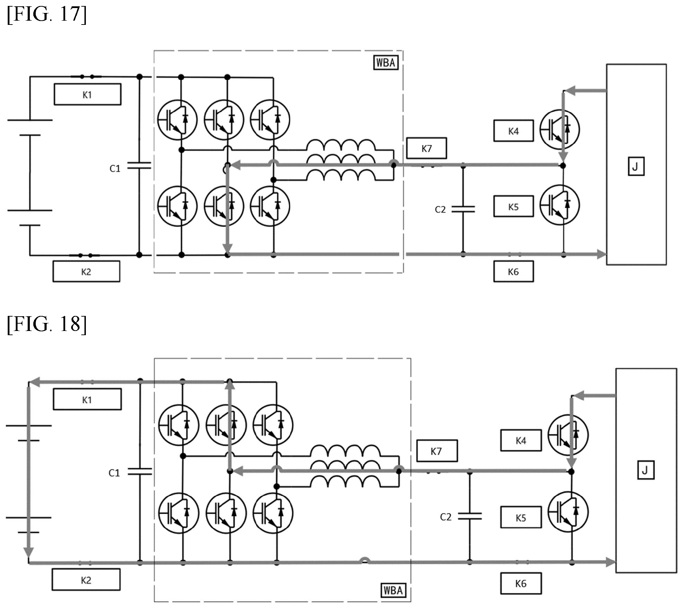

When a voltage of the electrical energy received at the charging port is lower than a voltage of the power battery, for example, the voltage of the power battery is 600V while a charging pile can merely provide 500V, boost charging is therefore required. During boost charging, the fourth contactor K6 and the fifth contactor K7 are closed, the first switching transistor K4 is controlled to be turned on, the second switching transistor K5 is controlled to be turned off, the first contactor K1 and the second contactor K2 for the power battery are closed, and respective upper switching transistors of the first bridge arm, the second bridge arm, and the third bridge arm are controlled to be turned off and a lower switching transistor of at least one bridge arm is controlled to be turned on for a first preset time, causing the three-phase winding to be charged by the electrical energy received at the charging port. For a specific current direction during charging in this case, reference is made to FIG. 17.

After turn-on for the first preset time, the respective lower switching transistors of the first bridge arm, the second bridge arm, and the third bridge arm are controlled to be turned off and an upper switching transistor of the at least one bridge arm is controlled to be turned on (which is opposite to the on/off states of the bridge arms during the foregoing charging of the three-phase winding), causing the electrical energy received at the charging port J and a freewheeling current of the three-phase winding to jointly boost the voltage of the electrical energy received at the charging port J and then charge the power battery. In this way, boost charging is implemented. For a specific current direction during charging in this case, reference is made to FIG. 18. These two processes are repeated. In other words, the two current charging processes shown in FIG. 17 and FIG. 18 are repeated until charging ends, for example, until the power battery is fully charged.

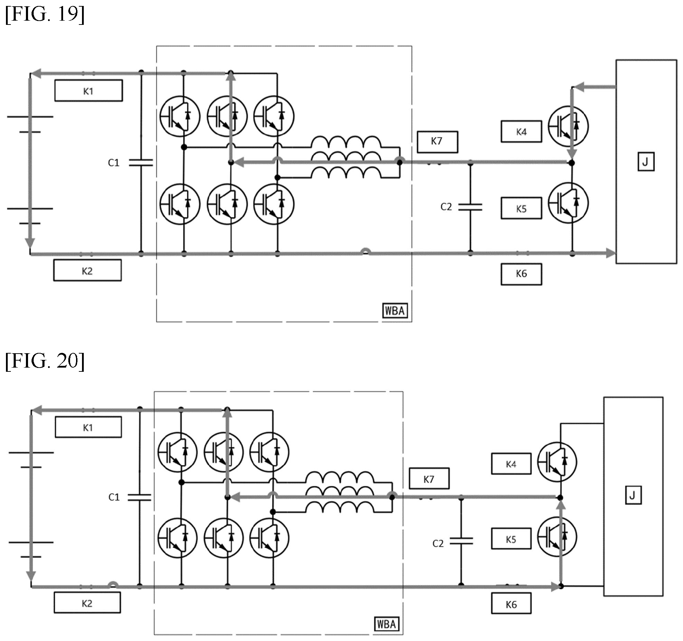

When the voltage of the electrical energy received at the charging port is higher than the voltage of the power battery, for example, the voltage of the power battery is 300V while the charging pile can provide 800V, buck charging is therefore required. During buck charging, the fourth contactor K6 and the fifth contactor K7 are closed, and the first contactor K1 and the second contactor K2 are directly closed; and in a first stage, the first switching transistor K4 is controlled to be turned on and the second switching transistor K5 is controlled to be turned off for a duration, the respective lower switching transistors of the first bridge arm, the second bridge arm, and the third bridge arm are controlled to be turned off and an upper switching transistor of at least one bridge arm is controlled to be turned on, causing the three-phase winding and the power battery to be simultaneously charged by the electrical energy received at the charging port J. The three-phase winding can be considered as an inductor in terms of electrical characteristics, and the inductor exhibits a current-impeding effect within a duration for which the inductor is charged (not continuously energized). Therefore, the three-phase winding can be considered as having a relatively high resistance. As such, the three-phase winding and the power battery actually share the voltage and jointly receive the electrical energy, so that a voltage received by the power battery becomes lower. In other words, buck charging of the power battery is implemented. For a specific current direction during charging in this case, reference is made to FIG. 19. The output voltage of the charging pile is higher than the voltage of the power battery. Therefore, output power of the charging pile is higher than it would be when the charging pile outputs at the voltage of the power battery, thereby increasing the output power of the charging pile. As a result, low-voltage electric vehicles are effectively charged, and utilization of the power of the charging pile is maximized, so that the charging pile can maximize its output power, thereby reducing charging time.

After the first switching transistor K4 is turned on and the second switching transistor K5 is turned off for the duration, in a second stage, the first switching transistor K4 is controlled to be turned off and the second switching transistor K5 is controlled to be turned on for a duration. The two durations may be the same or different, and the specific durations are determined by an actual voltage of the power battery. Initially during charging, the actual voltage is relatively low. As the charging process proceeds, the actual voltage increases; therefore, corresponding durations for turn-on or turn-off are correspondingly shortened. The specific durations may be determined based on the actual voltage of the power battery.

After the first switching transistor K4 is turned on and the second switching transistor K5 is turned off for the duration, in the second stage, the first switching transistor K4 is controlled to be turned off, the second switching transistor K5 is controlled to be turned on, the respective lower switching transistors of the first bridge arm, the second bridge arm, and the third bridge arm are controlled to be turned off, and the upper switching transistor of the at least one bridge arm is controlled to be turned on (which is the same as the on/off states of the bridge arms during the foregoing simultaneous charging of the three-phase winding and the power battery), causing the power battery to continue to be buck-charged by the freewheeling current of the three-phase winding, while the electrical energy received at the charging port no longer supplies power to the three-phase winding and the power battery during this period. For a specific current direction during charging in this case, reference is made to FIG. 20. These two processes are repeated. In other words, the two current charging processes shown in FIG. 19 and FIG. 20 are repeated until charging ends.

It will be understood, based on the foregoing description and the current directions in FIG. 17, FIG. 18, FIG. 19, and FIG. 20, that a current direction of the charging system provided in the present invention remains consistent and is never reversed during either boost charging or buck charging. For example, during charging, a current electric vehicle may send its real-time voltage of 200V to the charging pile. However, a voltage of the power battery at full charge is 1000V, and a maximum charging voltage that can be provided by the charging pile is 750V. In this case, initially, the charging system charges the power battery in a buck charging mode, allowing the charging pile to maximize its output and achieve high output power. When the power battery is charged to 750V, the charging system, without the need to release electrical energy, directly and seamlessly switches to a boost charging mode to continue to charge the power battery until the power battery is fully charged to 1000V.

Therefore, when switching either from boost charging to buck charging or from buck charging to boost charging, the charging system does not require an energy release process, and switching can be implemented without the release of electrical energy. This avoids the waste of electrical energy, reduces charging costs, shortens charging time, and provides users with better charging experience.

For the precharge capacitor C1, generally, before charging of the power battery, the precharge capacitor C1 first needs to be precharged, to cause a voltage of the precharge capacitor C1 to reach or approach the real-time voltage of the power battery. Current timing sequence of the precharge capacitor C1 is similar to that of boost charging and buck charging.

When boost precharging is required, that is, the charging system operates in a boost precharging mode, the fourth contactor K6 and the fifth contactor K7 are closed, the first switching transistor K4 is controlled to be turned on, the second switching transistor K5 is controlled to be turned off, the first contactor K1 and the second contactor K2 for the power battery are opened, and the respective upper switching transistors of the first bridge arm, the second bridge arm, and the third bridge arm are controlled to be turned off and a lower switching transistor of at least one bridge arm is controlled to be turned on for a second preset time, causing the three-phase winding to be charged by the electrical energy received at the charging port J or electrical energy provided by an in-vehicle power supply (for example, a high-voltage side of a battery after DC-DC conversion). In this case, for the specific current direction during charging, reference is made to FIG. 17. An only difference lies in that the first contactor K1 and the second contactor K2 are opened rather than closed when boost precharging is performed on the precharge capacitor C1.

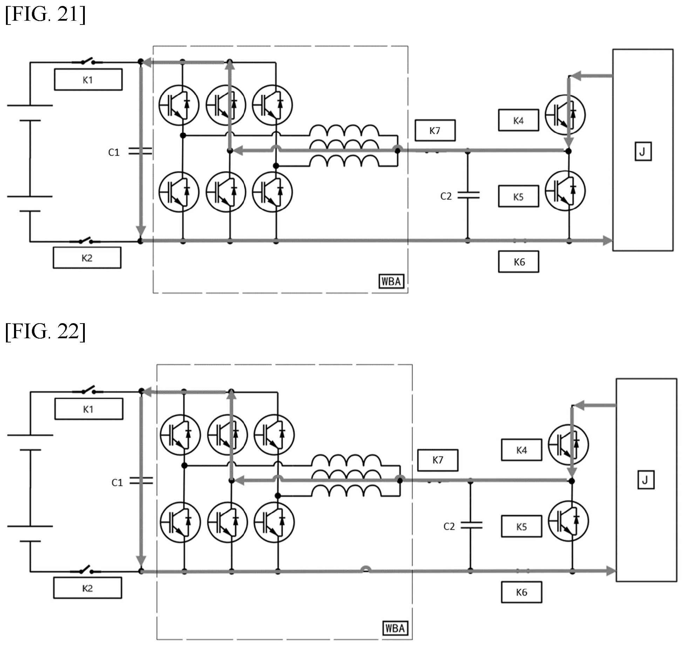

After turn-on for the second preset time, the respective lower switching transistors of the first bridge arm, the second bridge arm, and the third bridge arm are controlled to be turned off and an upper switching transistor of the at least one bridge arm is controlled to be turned on, causing the freewheeling current of the three-phase winding, and the electrical energy received at the charging port J or the electrical energy provided by the in-vehicle power supply to jointly boost the voltage and then charge the precharge capacitor C1; and the process is repeated until a difference between the voltage of the precharge capacitor C1 and a current real-time voltage of the power battery falls within a preset range. For a specific current direction during charging in this case, reference is made to FIG. 21.

When buck precharging is required, that is, the charging system operates in a buck precharging mode, the fourth contactor K6 and the fifth contactor K7 are closed, and the first contactor K1 and the second contactor K2 are opened; and in a first stage, the first switching transistor K4 is controlled to be turned on and the second switching transistor K5 is controlled to be turned off for a duration, the respective lower switching transistors of the first bridge arm, the second bridge arm, and the third bridge arm are controlled to be turned off and an upper switching transistor of at least one bridge arm is controlled to be turned on, causing the electrical energy received at the charging port J or the electrical energy provided by the in-vehicle power supply to simultaneously charge the three-phase winding and the precharge capacitor C1, that is, to buck-precharge the precharge capacitor C1. For a specific current direction during charging in this case, reference is made to FIG. 22.

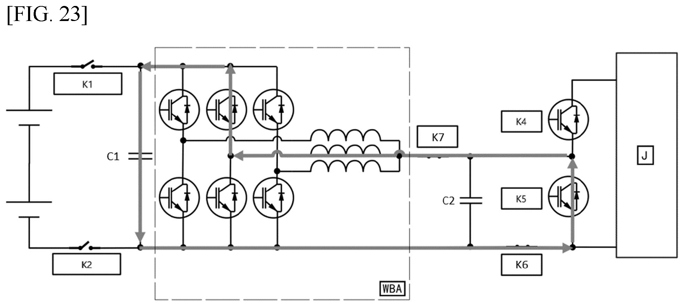

After the first switching transistor K4 is controlled to be turned on and the second switching transistor K5 is controlled to be turned off for the duration, in a second stage, the first switching transistor K4 is controlled to be turned off and the second switching transistor K5 is controlled to be turned on for a duration. This case is identical to that of the foregoing buck charging. The two durations may be the same or different, and the specific durations are also determined by the actual voltage of the power battery. During this period, the respective lower switching transistors of the first bridge arm, the second bridge arm, and the third bridge arm are controlled to be turned off and the upper switching transistor of the at least one bridge arm is controlled to be turned on, causing the precharge capacitor C1 to continue to be buck-charged by the freewheeling current of the three-phase winding; and the process is repeated until the difference between the voltage of the precharge capacitor C1 and the current real-time voltage of the power battery 300 falls within the preset range. For a specific current direction during charging in this case, reference is made to FIG. 23.

During direct precharging, that is, when the charging system operates in a direct precharging mode, the fourth contactor K6 and the fifth contactor K7 are closed, the first switching transistor K4 is controlled to be turned on, the second switching transistor K5 is controlled to be turned off, the first contactor K1 and the second contactor K2 are controlled to be opened, and the respective lower switching transistors of the first bridge arm, the second bridge arm, and the third bridge arm are controlled to be turned off and an upper switching transistor of at least one bridge arm is controlled to be turned on, causing the electrical energy received at the charging port J or the electrical energy provided by the in-vehicle power supply to be transmitted to the precharge capacitor C1 via the three-phase winding and the upper switching transistor of the at least one bridge arm and to directly charge the precharge capacitor C1 until the difference between the voltage of the precharge capacitor and the current real-time voltage of the power battery 300 falls within the preset range.

The foregoing process implements precharging of the precharge capacitor C1. In addition, when the charging port J does not receive electrical energy or the charging port J fails to transmit electrical energy due to a fault, precharging of the precharge capacitor C1 can still be implemented by using the electrical energy provided by the in-vehicle power supply. As a result, when the power battery 300 subsequently discharges, precharging of the precharge capacitor C1 is implemented first before external discharging is performed, thereby avoiding a discharging fault in the power battery 300.

According to the foregoing embodiments, in the charging system of the present invention, boost charging and buck charging functions are implemented by adding merely switching transistors, without the need for a direct current fast charging boost or buck module. That is, when boost charging is required, a boost charging circuit is formed using the inductive element and the bridge arm module, to boost the voltage received at the charging port and then charge the power battery, thereby resolving the problem of boosting a voltage of a low-voltage charging pile to charge an electric vehicle. Meanwhile, when buck charging is required, a buck charging circuit is formed using the inductive element and the bridge arm module, to buck the voltage received at the charging port and then charge the power battery, thereby resolving the problem that a high-voltage charging pile with low output power cannot effectively charge a low-voltage electric vehicle and utilization of the power of the charging pile cannot be maximized, maximizing output power of the charging pile, and reducing charging time. The foregoing voltage boosting and voltage bucking processes improve compatibility and convenience of electric vehicle charging.

Moreover, during charging, all circuit loops involve the inductive element and the switching transistors, thereby effectively avoiding risk of a short circuit between the vehicle and the charging pile during charging. In addition to the involvement of the inductor, a precharge circuit of the power battery can also be utilized in combination to further avoid the risk of a short circuit between the vehicle and the charging pile.

The first contactor or the second contactor is in a closed state during both boost charging and buck charging, thereby distinguishing between a driving condition and a charging condition. Under driving or similar operating conditions, the first contactor or the second contactor is opened to prevent the charging port from becoming live when the power battery discharges. This avoids risk of electric shock when a person accidentally touches the charging port or a corresponding position without awareness.

The entire charging system reuses the existing structure with very few additional components incorporated. As a result, the overall structure utilizes a relatively small number of components and features a simplified circuit layout. This reduces space occupancy while lowering costs of electric vehicles. Furthermore, due to the relatively simple control logic, EMC design difficulty of the entire vehicle is indirectly reduced.

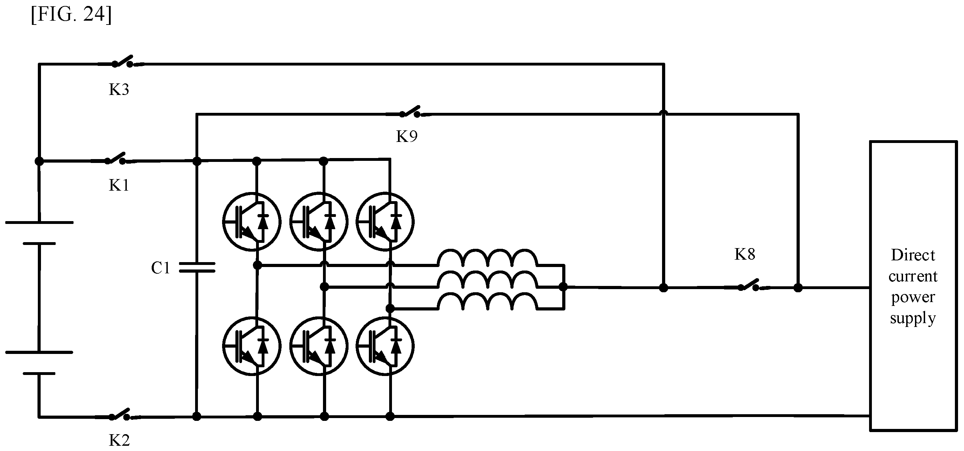

FIG. 24 is a diagram of a structure of a charging system 200 according to an embodiment of the application. As shown in FIG. 24, the charging system 200 includes a switch component 2013, a bridge arm module 2012, an inductive element 2011, and a controller 202. The charging system 200 is configured to charge a power battery 300.

A first end of the bridge arm module 2012 is configured to connect to a positive terminal of the power battery 300. A second end of the bridge arm module 2012 is configured to connect to a negative terminal of the power battery 300. A first end of the inductive element 2011 is configured to connect to a direct current power supply via the switch component 2013. A bridge arm midpoint of the bridge arm module 2012 is connected to a second end of the inductive element 2011. The second end of the bridge arm module 2012 is configured to connect to the direct current power supply.

When the charging system 200 operates in a boost mode, the controller 202 controls an on/off state of the switch component 2013, to cause the bridge arm module 2012 and the inductive element 2011 to form a boost circuit.

When the charging system 200 operates in a buck mode, the controller 202 controls the on/off state of the switch component 2013, to cause the bridge arm module 2012 and the inductive element 2011 to form a buck circuit.

The power battery 300 in embodiments of the application may be a power battery in an electric device. The charging system 200 in embodiments of the application is an apparatus for charging the power battery 300. The electric device may be a device driven by electrical energy. For example, the electric device may include any one of the following: a vehicle, an aircraft, a ship, and an energy storage cabinet.

The switch component 2013 may include at least one contactor.

The bridge arm module 2012 may include at least one bridge arm midpoint. The bridge arm module 2012 may include at least one bridge arm unit. Each bridge arm unit has a bridge arm midpoint. Each bridge arm unit may include two switching transistors. A connection point between the two switching transistors is the bridge arm midpoint of the bridge arm unit.

The inductive element 2011 may include at least one inductor. One end of the inductor is connected to the direct current power supply via the switch component 2013. The other end of the inductor is connected to one bridge arm midpoint of the bridge arm module 2012. Each of the at least one inductor is connected to a different bridge arm midpoint.

The number of bridge arm units in the bridge arm module 2012 may be designed according to requirements.

In a possible embodiment, a bridge arm module in a motor controller may be reused as the bridge arm module 2012, and an inductor in a motor may be reused as the inductive element 2011.

Optionally, as shown in FIG. 24, the switch component 2013 includes a first contactor K1 and a second contactor K2. The positive terminal of the power battery 300 is configured to connect to a first end of the first contactor K1. A second end of the first contactor K1 is connected to the first end of the bridge arm module 2012. The negative terminal of the power battery 300 is configured to connect to a first end of the second contactor K2. A second end of the second contactor K2 is connected to the second end of the bridge arm module 2012.

In this embodiment of the application, the bridge arm module 2012 is connected to the power battery 300 via the first contactor K1 and the second contactor K2.

Optionally, as shown in FIG. 24, the switch component 2013 further includes a third contactor K3, a sixth contactor K8, and a seventh contactor K9. The first end of the first contactor K1 is connected to a first end of the third contactor K3. The second end of the first contactor K1 is connected to a first end of the seventh contactor K9. A second end of the seventh contactor K9 is configured to connect to a positive terminal of the direct current power supply and a first end of the sixth contactor K8. A second end of the third contactor K3 is connected to a second end of the sixth contactor K8. The second end of the sixth contactor K8 is configured to connect to the first end of the inductive element 2011. A negative terminal of the direct current power supply is configured to connect to the second end of the bridge arm module 2012.

Optionally, the charging system 200 further includes a precharge capacitor C1. The second end of the first contactor K1 is connected to a first end of the precharge capacitor C1. The second end of the second contactor K2 is connected to a second end of the precharge capacitor C1.

The precharge capacitor C1 may be a precharging capacitor. Before the direct current power supply charges the power battery 300, the precharge capacitor C1 may be precharged, thereby avoiding large current generated during charging of the power battery 300 due to the precharge capacitor C1 not being fully charged. The precharge capacitor C1 may be configured to stabilize a voltage across the power battery 300, and can reduce ripples generated during a voltage boosting or voltage bucking process when the direct current power supply charges the power battery 300.

Optionally, the bridge arm module 2012 includes N bridge arm units connected in parallel. Each bridge arm unit includes an upper switching transistor and a lower switching transistor connected in series. The inductive element 2011 includes N inductors. First ends of the N inductors are connected to the second end of the sixth contactor K8. Second ends of the N inductors are connected to bridge arm midpoints of the N bridge arm units in a one-to-one correspondence. A bridge arm midpoint of each bridge arm unit is a connection point between the upper switching transistor and the lower switching transistor of each bridge arm unit. N is an integer greater than or equal to 1.

A first end of the upper switching transistor is connected to the second end of the first contactor K1. A second end of the upper switching transistor is connected to a first end of the corresponding lower switching transistor. A second end of the lower switching transistor is connected to the second end of the second contactor K2. A connection point between the second end of the upper switching transistor and the first end of the corresponding lower switching transistor is the bridge arm midpoint.

The upper switching transistor and the lower switching transistor each may be any one of the following: an insulated gate bipolar transistor (IGBT), or a metal-oxide-semiconductor field-effect transistor (MOSFET).

In FIG. 24, N=3 is used as an example for description.

The controller 202 may be configured to: control opening or closing of the first contactor K1, the second contactor K2, the third contactor K3, the sixth contactor K8, and the seventh contactor K9, and control states of switching transistors in the bridge arm module 2012, to control the charging system 200 to operate in a boost mode, a buck mode, or a direct charging mode.

The direct current power supply is an apparatus for providing a direct current. For example, the direct current power supply may be a direct current charging pile.

Optionally, the direct current power supply includes a direct current charging pile, DC/DC, or the like.

In this embodiment of the application, the direct current/direct current (DC/DC) can convert a direct current of one voltage into a direct current of another voltage. For example, when the DC/DC converts a high-voltage direct current into a low-voltage direct current, the DC/DC may be an input end of the DC/DC. For example, the input end of the DC/DC may be connected to the power battery 300.

Optionally, based on the charging system 200 in FIG. 24, that the controller 202 controls the on/off state of the switch component 2013, to cause the bridge arm module 2012 and the inductive element 2011 to form the boost circuit includes:
in a first stage, the controller 202 controls the sixth contactor K8 to be closed, the third contactor K3 and the seventh contactor K9 to be both opened, at least one lower switching transistor of the bridge arm module 2012 to be turned on, and N upper switching transistors of the bridge arm module 2012 to be all turned off, to cause the direct current power supply to charge the inductive element 2011; and
in a second stage, the controller 202 controls the first contactor K1, the second contactor K2, and the sixth contactor K8 to be closed, the third contactor K3 and the seventh contactor K9 to be both opened, at least one upper switching transistor of the bridge arm module 2012 to be turned on, and N lower switching transistors of the bridge arm module 2012 to be all turned off, to cause the direct current power supply and the inductive element 2011 to charge the power battery 300, where a charging voltage of the power battery 300 is equal to a sum of a voltage of the direct current power supply and a voltage of the inductive element 2011.

In embodiments of the application, in the first stage and the second stage, the first contactor K1 and the second contactor K2 may be closed or opened, which is not limited in embodiments of the application. When the charging system 200 operates in the boost mode, in the first stage, the controller 202 may control the sixth contactor K8 to be closed, the third contactor K3 and the seventh contactor K9 to be both opened, the at least one lower switching transistor of the bridge arm module 2012 to be turned on, and the N upper switching transistors of the bridge arm module 2012 to be all turned off. At this time, the direct current power supply charges an inductor connected in series to the at least one lower switching transistor, to cause a voltage across the inductor to increase. In the second stage, the controller 202 may control the first contactor K1, the second contactor K2, and the sixth contactor K8 to be closed, the third contactor K3 and the seventh contactor K9 to be both opened, the at least one upper switching transistor of the bridge arm module 2012 to be turned on, and the N lower switching transistors of the bridge arm module 2012 to be all turned off. At this time, due to a freewheeling effect of an inductor connected in series to the at least one upper switching transistor (the inductor connected in series to the at least one upper switching transistor is the inductor connected in series to the at least one lower switching transistor), the direct current power supply and the inductor connected in series to the at least one upper switching transistor jointly charge the power battery 300. The voltage across the power battery 300 is equal to a sum of the voltage of the direct current power supply and a voltage of the inductor connected in series to the at least one upper switching transistor, thereby implementing charging of the power battery 300 by the direct current power supply after voltage boosting. In this embodiment of the application, in the boost mode, the direct current power supply charges the power battery 300 via the inductor rather than directly charging the power battery 300. This prevents a sudden large charging current. Even if any one of the first contactor K1, the second contactor K2, the sixth contactor K8, or a positive or negative charging contactor of a charging pile is welded, there is no risk of a short circuit. Consequently, safety of boost charging is improved.

The first stage and the second stage are performed alternately, thereby implementing charging of the power battery 300 by the direct current power supply after voltage boosting. Each contactor may be periodically opened and closed, and each period may include the first stage and the second stage. Durations of the first stage and the second stage may be different, and the durations of the first stage and the second stage may be determined based on a parameter of the inductor, an output voltage of the direct current power supply, and the voltage of the power battery 300.

It will be noted that when the inductor connected in series to the at least one lower switching transistor is charged in the first stage, the inductor cannot be in a saturated state. When the inductor is in the saturated state, the voltage across the inductor does not increase, and thus a voltage boosting effect cannot be achieved.

Optionally, based on the charging system 200 in FIG. 24, that the controller 202 controls the on/off state of the switch component 2013, to cause the bridge arm module 2012 and the inductive element 2011 to form the buck circuit includes:
in a first stage, the controller 202 controls the second contactor K2, the third contactor K3, and the seventh contactor K9 to be all closed, the first contactor K1 and the sixth contactor K8 to be both opened, at least one upper switching transistor of the bridge arm module 2012 to be turned on, and N lower switching transistors of the bridge arm module 2012 to be all turned off, to cause the direct current power supply to charge the inductive element 2011 and the power battery 300 and
in a second stage, the controller 202 controls the second contactor K2, the third contactor K3 to be both closed, the first contactor K1 and the sixth contactor K8 to be both opened, at least one lower switching transistor of the bridge arm module 2012 to be turned on, and N upper switching transistors of the bridge arm module 2012 to be all turned off, to cause the inductive element 2011 to charge the power battery 300.

In this embodiment of the application, when the charging system 200 operates in the buck mode, in the first stage, the controller 202 may control the second contactor K2, the third contactor K3, and the seventh contactor K9 to be all closed, the first contactor K1 and the sixth contactor K8 to be both opened, the at least one upper switching transistor of the bridge arm module 2012 to be turned on, and the N lower switching transistors of the bridge arm module 2012 to be all turned off. At this time, the direct current power supply charges the power battery 300 and an inductor connected in series to the at least one upper switching transistor, during which the output voltage of the direct current power supply is divided across the power battery 300 and the inductor connected in series to the at least one upper switching transistor, so that the voltage across the power battery 300 is less than the output voltage of the direct current power supply, thereby implementing buck charging. In the second stage, the controller 202 may control the second contactor K2, the third contactor K3, and the seventh contactor K9 to be all closed, the first contactor K1 and the sixth contactor K8 to be both opened, the at least one lower switching transistor of the bridge arm module 2012 to be turned on, and the N upper switching transistors of the bridge arm module 2012 to be all turned off. At this time, due to a freewheeling effect of an inductor connected in series to the at least one lower switching transistor (the inductor connected in series to the at least one lower switching transistor is the inductor connected in series to the at least one upper switching transistor), the inductor connected in series to the at least one lower switching transistor charges the power battery 300, thereby implementing charging of the power battery 300 by the direct current power supply after voltage bucking. In this embodiment of the application, in the buck mode, the direct current power supply charges the power battery 300 via the inductor rather than directly charging the power battery 300. This prevents a sudden large charging current. Even if any one of the second contactor K2, the third contactor K3, the seventh contactor K9, or a positive or negative charging contactor of a charging pile is welded, there is no risk of a short circuit. Consequently, safety of buck charging is improved. In the buck mode, the direct current power supply can output at a voltage greater than the voltage of the power battery 300, so that the direct current power supply maximizes its output power, thereby increasing a charging current of the power battery 300 and thus reducing charging time of the power battery 300.

The first stage and the second stage are performed alternately, thereby implementing charging of the power battery 300 by the direct current power supply after voltage bucking. Each contactor may be periodically opened and closed, and each period may include the first stage and the second stage. Durations of the first stage and the second stage may be different, and the durations of the first stage and the second stage may be determined based on a parameter of the inductor, the output voltage of the direct current power supply, and the voltage of the power battery 300.

It will be noted that when the inductor connected in series to the at least one upper switching transistor is charged in the first stage, the inductor cannot be in a saturated state. When the inductor is in the saturated state, the voltage across the inductor does not increase, and thus a voltage bucking effect cannot be achieved.

Optionally, when the charging system 200 operates in the direct charging mode, the controller 202 controls the on/off state of the switch component 2013, to cause the direct current power supply to charge the power battery 300.

In this embodiment of the application, when the voltage of the direct current power supply is close to the voltage of the power battery 300, the charging system 200 may operate in the direct charging mode. For example, when the output voltage of the direct current power supply is greater than the voltage of the power battery 300, and a difference between the output voltage of the direct current power supply and the voltage of the power battery 300 is less than a set threshold (for example, 20V), the charging system 200 may operate in the direct charging mode.

Before charging of the power battery 300, the charging system 200 may operate in a precharging mode to first charge the precharge capacitor C1 (precharge capacitor), thereby avoiding a large current generated during charging of the power battery 300 due to the precharge capacitor C1 not being fully charged.

Optionally, based on the charging system 200 in FIG. 24, that the controller 202 controls the on/off state of the switch component 2013, to cause the direct current power supply to charge the power battery 300 includes: the controller 202 controls the first contactor K1, the second contactor K2, and the seventh contactor K9 to be all closed, and the third contactor K3 and the sixth contactor K8 to be both opened, to cause the direct current power supply to charge the power battery 300.

In this embodiment of the application, when the controller 202 controls the first contactor K1, the second contactor K2, and the seventh contactor K9 to be all closed, and the third contactor K3 and the sixth contactor K8 to be both opened, the charging system 200 operates in the direct charging mode. At this time, the direct current power supply may directly charge the power battery 300 without using the bridge arm module 2012 and the inductive element 2011, thereby improving energy conversion efficiency.

Optionally, when the charging system 200 operates in the precharging mode, the controller 202 controls the on/off state of the switch component 2013, to cause the bridge arm module 2012 and the inductive element 2011 to form a precharge circuit.

In this embodiment of the application, before charging of the power battery 300, the charging system 200 may operate in the precharging mode to first charge the precharge capacitor C1 (precharge capacitor), thereby avoiding large current generated during charging of the power battery 300 due to the precharge capacitor C1 not being fully charged.

Optionally, based on the charging system 200 in FIG. 24, that the controller 202 controls the on/off state of the switch component 2013, to cause the bridge arm module 2012 and the inductive element 2011 to form the precharge circuit includes:
in a first stage, the controller 202 controls the sixth contactor K8 to be closed, the first contactor K1, the second contactor K2, the third contactor K3, and the seventh contactor K9 to be all opened, at least one lower switching transistor of the bridge arm module 2012 to be turned on, and N upper switching transistors of the bridge arm module 2012 to be all turned off, to cause the direct current power supply to charge the inductive element 2011; and
in a second stage, the controller 202 controls the sixth contactor K8 to be closed, the first contactor K1, the second contactor K2, the third contactor K3, and the seventh contactor K9 to be all opened, at least one upper switching transistor of the bridge arm module 2012 to be turned on, and N lower switching transistors of the bridge arm module 2012 to be all turned off, to cause the direct current power supply and the inductive element 2011 to charge the precharge capacitor C1, where a charging voltage of the precharge capacitor C1 is equal to a sum of a voltage of the direct current power supply and a voltage of the inductive element 2011.

In this embodiment of the application, when the charging system 200 operates in the precharging mode, in the first stage, the controller 202 may control the sixth contactor K8 to be closed, the first contactor K1, the second contactor K2, the third contactor K3, and the seventh contactor K9 to be all opened, the at least one lower switching transistor of the bridge arm module 2012 to be turned on, and the N upper switching transistors of the bridge arm module 2012 to be all turned off. At this time, the direct current power supply charges an inductor connected in series to the at least one lower switching transistor, to cause a voltage across the inductor to increase. In the second stage, the controller 202 may control the sixth contactor K8 to be closed, the first contactor K1, the second contactor K2, the third contactor K3, and the seventh contactor K9 to be all opened, the at least one upper switching transistor of the bridge arm module 2012 to be turned on, and the N lower switching transistors of the bridge arm module 2012 to be all turned off. At this time, due to a freewheeling effect of an inductor connected in series to the at least one upper switching transistor (the inductor connected in series to the at least one upper switching transistor is the inductor connected in series to the at least one lower switching transistor), the direct current power supply and the inductor connected in series to the at least one upper switching transistor jointly charge the precharge capacitor C1, thereby implementing precharging of the precharge capacitor C1 by the direct current power supply.

Durations of the first stage and the second stage may be different, and the durations of the first stage and the second stage may be determined based on a parameter of the inductor, an output voltage of the direct current power supply, and a parameter of the precharge capacitor C1.

It will be noted that when the inductor connected in series to the at least one lower switching transistor is charged in the first stage, the inductor cannot be in a saturated state.

In this embodiment of the application, during precharging of the precharge capacitor C1, the direct current power supply and the inductor connected in series to the at least one upper switching transistor jointly charge the precharge capacitor C1. Due to the freewheeling effect of the inductor, a sudden large charging current is prevented. This avoids large current generated during precharging, thereby improving safety of precharging.

In this embodiment of the application, when the voltage of the direct current power supply is less than the voltage of the power battery 300, the controller 202 controls the bridge arm module 2012 and the inductive element 2011 to form the boost circuit, to cause the charging system 200 to operate in the boost mode, thereby implementing charging of the power battery 300 by the direct current power supply after voltage boosting; and when the voltage of the direct current power supply is greater than the voltage of the power battery 300, the controller 202 controls the bridge arm module 2012 and the inductive element 2011 to form the buck circuit, to cause the charging system 200 to operate in the buck mode, thereby implementing charging of the power battery 300 by the direct current power supply after voltage bucking. This achieves compatibility with direct current power supplies having different voltages for charging the power battery 300.

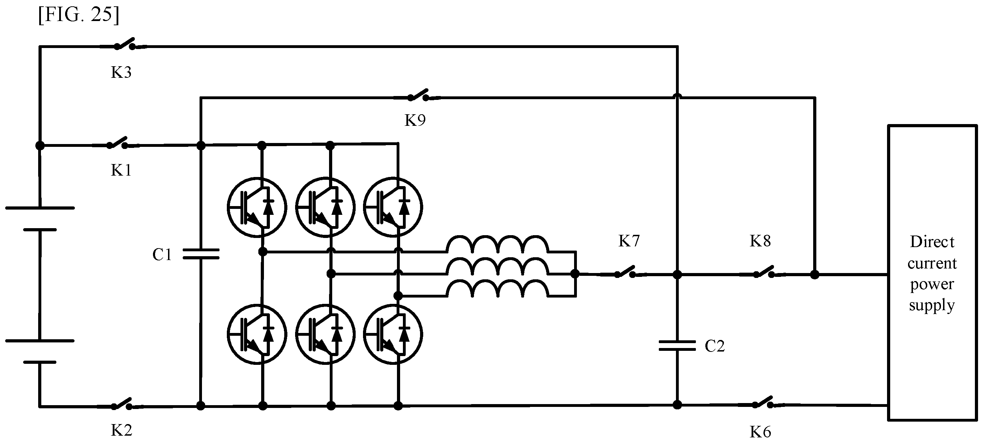

FIG. 25 is a diagram of a structure of another charging system 200 according to an embodiment of the application. FIG. 25 is obtained based on FIG. 24. As shown in FIG. 25, based on FIG. 24, the switch component 2013 further includes a fourth contactor K6 and a fifth contactor K7.

The negative terminal of the direct current power supply is configured to connect to the second end of the second contactor K2 via the fourth contactor K6. Specifically, the negative terminal of the direct current power supply is connected to a first end of the fourth contactor K6, and a second end of the fourth contactor K6 is connected to the second end of the second contactor K2.

The second end of the sixth contactor K8 is connected to the first end of the inductive element 2011. Specifically, the second end of the sixth contactor K8 is connected to a first end of the fifth contactor K7, and a second end of the fifth contactor K7 is connected to the first end of the inductive element 2011.

Adding the fifth contactor K7 can reduce risk of electric shock. During driving or parking of the vehicle, if the power battery 300 is in operation, the first end of the fifth contactor K7 (charging port) may become live. If the first end of the fifth contactor K7 is accidentally touched, an electric shock may occur. This results in a risk of electric shock.

Optionally, the charging system 200 further includes a filter capacitor C2. A first end of the filter capacitor C2 is connected to the second end of the sixth contactor K8. A second end of the filter capacitor C2 is connected to the second end of the fourth contactor K6.

In this embodiment of the application, the filter capacitor C2 can further reduce ripples generated during a voltage boosting or voltage bucking process when the direct current power supply charges the power battery 300.

In the following embodiments, description is provided by using an example in which the direct current power supply is a direct current charging pile.

Optionally, based on the charging system 200 in FIG. 25, that the control module controls the bridge arm module and the inductive element 2011 to form the boost circuit includes:
in a first stage, the control module controls the sixth contactor K8, the fourth contactor K6, and the fifth contactor K7 to be all closed, the third contactor K3 and the fifth contactor K9 to be both opened, at least one lower switching transistor of the bridge arm module to be turned on, and N upper switching transistors of the bridge arm module to be all turned off, to cause the direct current charging pile to charge the inductive element 2011; and
in a second stage, the control module controls the first contactor K1, the second contactor K2, the sixth contactor K8, the fourth contactor K6, and the fifth contactor K7 to be all closed, the third contactor K3 and the fifth contactor K9 to be both opened, at least one upper switching transistor of the bridge arm module to be turned on, and N lower switching transistors of the bridge arm module to be all turned off, to cause the direct current charging pile and the inductive element 2011 to charge the power battery 300, where a charging voltage of the power battery 300 is equal to a sum of a voltage of the direct current charging pile and a voltage of the inductive element 2011.

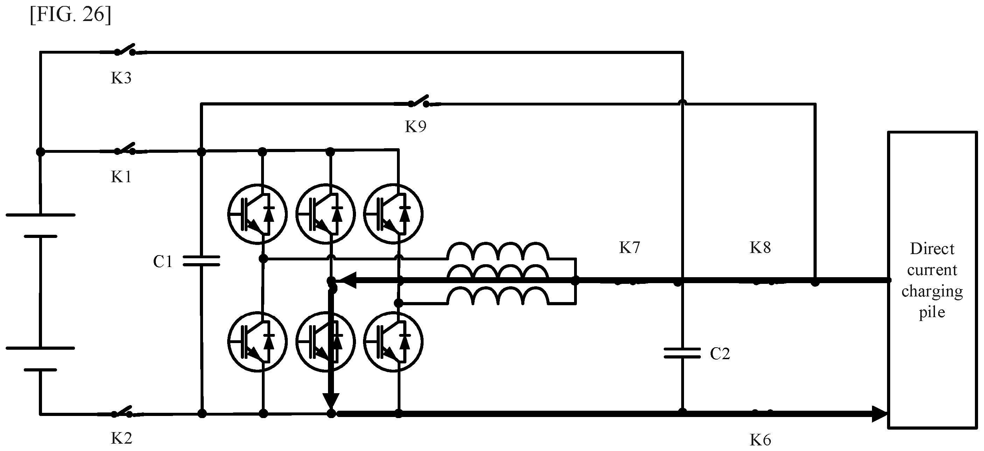

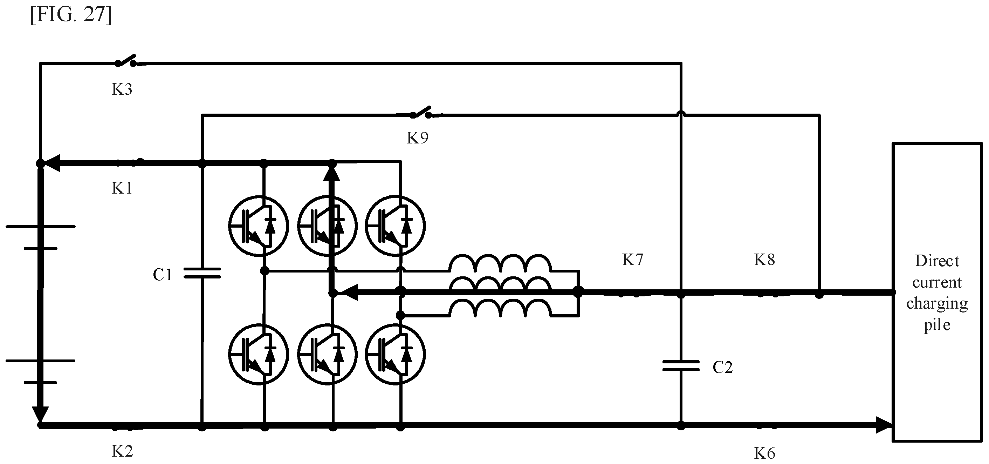

In embodiments of the application, in the first stage and the second stage, the first contactor K1 and the second contactor K2 may be closed or opened, which is not limited in embodiments of the application. When the charging system 200 operates in the boost mode, in the first stage, reference is made to FIG. 26. FIG. 26 is a diagram of a current flow direction in a first stage when a charging system 200 operates in a boost mode according to an embodiment of the application. As shown in FIG. 26, the control module may control the sixth contactor K8, the fourth contactor K6, and the fifth contactor K7 to be all closed, the third contactor K3 and the fifth contactor K9 to be both opened, the at least one lower switching transistor of the bridge arm module to be turned on, and the N upper switching transistors of the bridge arm module to be all turned off. At this time, the direct current charging pile charges an inductor connected in series to the at least one lower switching transistor, to cause a voltage across the inductor to increase. In the second stage, reference is made to FIG. 27. FIG. 27 is a diagram of a current flow direction in a second stage when a charging system 200 operates in a boost mode according to an embodiment of the application. As shown in FIG. 27, the control module may control the first contactor K1, the second contactor K2, the sixth contactor K8, the fourth contactor K6, and the fifth contactor K7 to be all closed, the third contactor K3 and the fifth contactor K9 to be both opened, the at least one upper switching transistor of the bridge arm module to be turned on, and the N lower switching transistors of the bridge arm module to be all turned off. At this time, due to a freewheeling effect of an inductor connected in series to the at least one upper switching transistor (the inductor connected in series to the at least one upper switching transistor is the inductor connected in series to the at least one lower switching transistor), the direct current charging pile and the inductor connected in series to the at least one upper switching transistor jointly charge the power battery 300. A voltage across the power battery 300 is equal to a sum of the voltage of the direct current charging pile and a voltage of the inductor connected in series to the at least one upper switching transistor, thereby implementing charging of the power battery 300 by the direct current charging pile after voltage boosting. In this embodiment of the application, in the boost mode, the direct current charging pile charges the power battery 300 via the inductor rather than directly charging the power battery 300. This prevents a sudden large charging current. Even if any one of the second contactor K2, the third contactor K3, the fifth contactor K9, or a positive or negative charging contactor of a charging pile is welded, there is no risk of a short circuit. Consequently, safety of boost charging is improved.

The first stage and the second stage are performed alternately, thereby implementing charging of the power battery 300 by the direct current charging pile after voltage boosting. Each contactor may be periodically opened and closed, and each period may include the first stage and the second stage. Durations of the first stage and the second stage may be different, and the durations of the first stage and the second stage may be determined based on a parameter of the inductor, an output voltage of the direct current charging pile, and the voltage of the power battery 300.

It will be noted that when the inductor connected in series to the at least one lower switching transistor is charged in the first stage, the inductor cannot be in a saturated state. When the inductor is in the saturated state, the voltage across the inductor does not increase, and thus a voltage boosting effect cannot be achieved.

Optionally, based on the charging system 200 in FIG. 25, that the control module controls the bridge arm module and the inductive element 2011 to form the buck circuit includes:
in a first stage, the control module controls the second contactor K2, the third contactor K3, the fifth contactor K9, the fourth contactor K6, and the fifth contactor K7 to be all closed, the first contactor K1 and the sixth contactor K8 to be both opened, at least one upper switching transistor of the bridge arm module to be turned on, and N lower switching transistors of the bridge arm module to be all turned off, to cause the direct current charging pile to charge the inductive element 2011 and the power battery 300; and
in a second stage, the control module controls the second contactor K2, the third contactor K3, the fifth contactor K9, the fourth contactor K6, and the fifth contactor K7 to be all closed, the first contactor K1 and the sixth contactor K8 to be both opened, at least one lower switching transistor of the bridge arm module to be turned on, and N upper switching transistors of the bridge arm module to be all turned off, to cause the inductive element 2011 to charge the power battery 300.

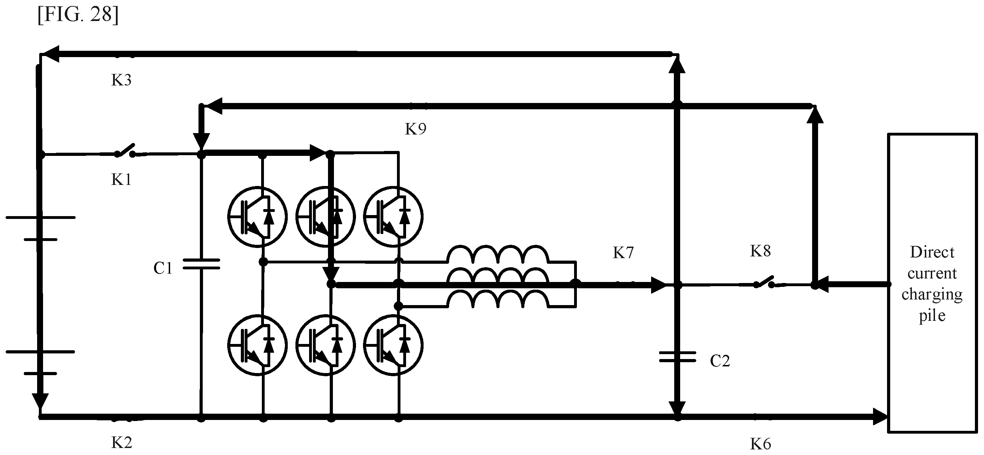

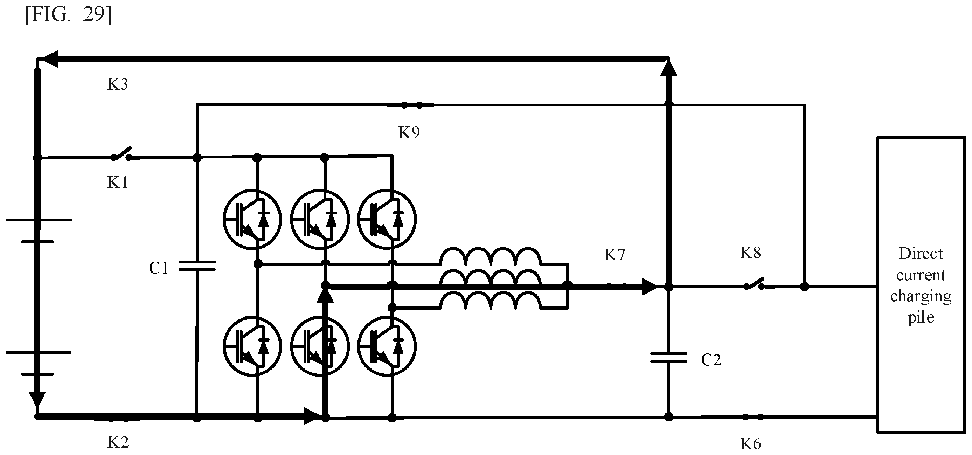

In this embodiment of the application, when the charging system 200 operates in the buck mode, in the first stage, reference is made to FIG. 28. FIG. 28 is a diagram of a current flow direction in a first stage when a charging system 200 operates in a buck mode according to an embodiment of the application. As shown in FIG. 28, the control module may control the second contactor K2, the third contactor K3, the fifth contactor K9, the fourth contactor K6, and the fifth contactor K7 to be all closed, the first contactor K1 and the sixth contactor K8 to be both opened, the at least one upper switching transistor of the bridge arm module to be turned on, and the N lower switching transistors of the bridge arm module to be all turned off. At this time, the direct current charging pile charges the power battery 300 and an inductor connected in series to the at least one upper switching transistor, during which the output voltage of the direct current charging pile is divided across the power battery 300 and the inductor connected in series to the at least one upper switching transistor, so that the voltage across the power battery 300 is less than the output voltage of the direct current charging pile, thereby implementing buck charging. In the second stage, reference is made to FIG. 29. FIG. 29 is a diagram of a current flow direction in a second stage when a charging system 200 operates in a buck mode according to an embodiment of the application. As shown in FIG. 29, the control module may control the second contactor K2, the third contactor K3, and the fifth contactor K7 to be all closed, the first contactor K1 and the sixth contactor K8 to be both opened, the at least one lower switching transistor of the bridge arm module to be turned on, and the N upper switching transistors of the bridge arm module to be all turned off. At this time, due to a freewheeling effect of an inductor connected in series to the at least one lower switching transistor (the inductor connected in series to the at least one lower switching transistor is the inductor connected in series to the at least one upper switching transistor), the inductor connected in series to the at least one lower switching transistor charges the power battery 300, thereby implementing charging of the power battery 300 by the direct current charging pile after voltage bucking. In the second stage, the fifth contactor K9 and a current contactor may be opened or closed, which is not limited in embodiments of the application. In this embodiment of the application, in the buck mode, the direct current charging pile charges the power battery 300 via the inductor rather than directly charging the power battery 300. This prevents a sudden large charging current. Even if any one of the second contactor K2, the third contactor K3, the fifth contactor K9, or a positive or negative charging contactor of a charging pile is welded, there is no risk of a short circuit. Consequently, safety of buck charging is improved. In the buck mode, the direct current charging pile can output at a voltage greater than the voltage of the power battery 300, so that the direct current charging pile maximizes its output power, thereby increasing a charging current of the power battery 300 and thus reducing charging time of the power battery 300.

The first stage and the second stage are performed alternately, thereby implementing charging of the power battery 300 by the direct current charging pile after voltage bucking. Each contactor may be periodically opened and closed, and each period may include the first stage and the second stage. Durations of the first stage and the second stage may be different, and the durations of the first stage and the second stage may be determined based on a parameter of the inductor, the output voltage of the direct current charging pile, and the voltage of the power battery 300.

It will be noted that when the inductor connected in series to the at least one upper switching transistor is charged in the first stage, the inductor cannot be in a saturated state. When the inductor is in the saturated state, the voltage across the inductor does not increase, and thus a voltage bucking effect cannot be achieved.

Optionally, based on the charging system 200 in FIG. 25, that the control module controls the on/off state of the switch component 2013 when the charging system 200 operates in a direct charging mode, to cause the direct current power supply to charge the battery includes: the control module controls the first contactor K1, the second contactor K2, the fifth contactor K9, and the fourth contactor K6 to be all closed, and the third contactor K3, the sixth contactor K8, and the fifth contactor K7 to be all opened, to cause the direct current charging pile to charge the power battery 300.

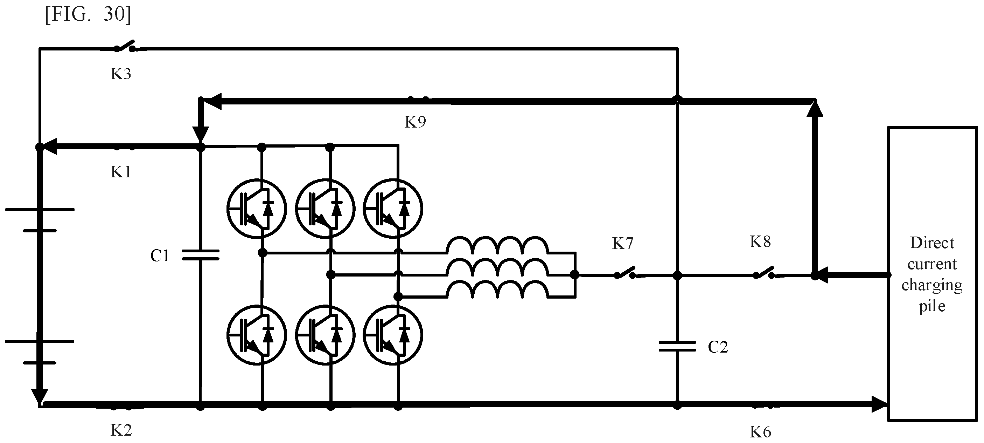

In this embodiment of the application, reference is made to FIG. 30. FIG. 30 is a diagram of a current flow direction when a charging system 200 operates in a direct charging mode according to an embodiment of the application. As shown in FIG. 30, when the control module controls the first contactor K1, the second contactor K2, the fifth contactor K9, and the fourth contactor K6 to be all closed, and the third contactor K3, the sixth contactor K8, and the fifth contactor K7 to be all opened, the charging system 200 operates in the direct charging mode. At this time, the direct current charging pile may directly charge the power battery 300 without using the bridge arm module and the inductive element 2011, thereby improving energy conversion efficiency. When the voltage of the direct current charging pile is close to the voltage of the power battery 300, the charging system 200 may operate in the direct charging mode. For example, when the output voltage of the direct current charging pile is greater than the voltage of the power battery 300, and a difference between the output voltage of the direct current charging pile and the voltage of the power battery 300 is less than a set threshold (for example, 20V), the charging system 200 may operate in the direct charging mode.

Optionally, based on the charging system 200 in FIG. 25, that the control module controls the on/off state of the switch component 2013 when the charging system 200 operates in a precharging mode, to cause the bridge arm module and the inductive element 2011 to form the precharge circuit includes:
in a first stage, the control module controls the sixth contactor K8, the fourth contactor K6, and the fifth contactor K7 to be all closed, the first contactor K1, the second contactor K2, the third contactor K3, and the fifth contactor K9 to be all opened, at least one lower switching transistor of the bridge arm module to be turned on, and N upper switching transistors of the bridge arm module to be all turned off, to cause the direct current charging pile to charge the inductive element 2011; and
in a second stage, the control module controls the sixth contactor K8, the fourth contactor K6, and the fifth contactor K7 to be all closed, the first contactor K1, the second contactor K2, the third contactor K3, and the fifth contactor K9 to be all opened, at least one upper switching transistor of the bridge arm module to be turned on, and N lower switching transistors of the bridge arm module to be all turned off, to cause the direct current charging pile and the inductive element 2011 to charge the precharge capacitor C1.

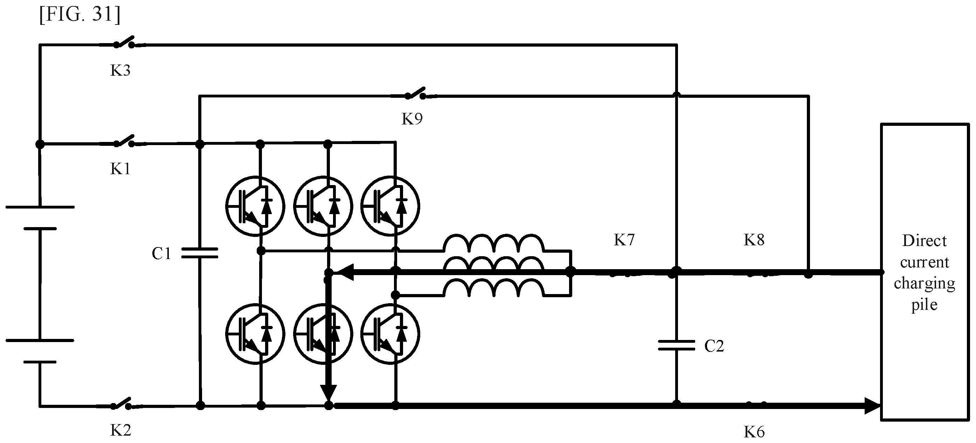

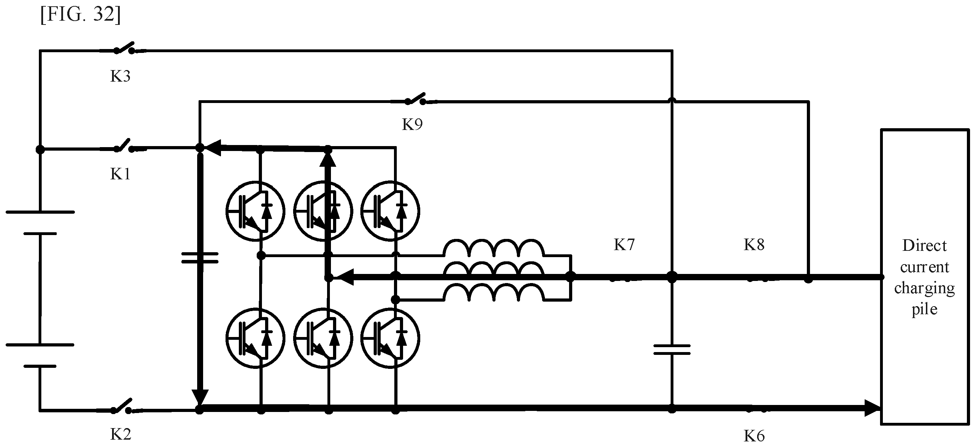

In this embodiment of the application, when the charging system 200 operates in the precharging mode, in the first stage, reference is made to FIG. 31. FIG. 31 is a diagram of a current flow direction in a first stage when a charging system 200 operates in a precharging mode according to an embodiment of the application. As shown in FIG. 31, the control module may control the sixth contactor K8, the fourth contactor K6, and the fifth contactor K7 to be all closed, the first contactor K1, the second contactor K2, the third contactor K3, and the fifth contactor K9 to be all opened, the at least one lower switching transistor of the bridge arm module to be turned on, and the N upper switching transistors of the bridge arm module to be all turned off. At this time, the direct current charging pile charges an inductor connected in series to the at least one lower switching transistor, to cause a voltage across the inductor to increase. In the second stage, reference is made to FIG. 32. FIG. 32 is a diagram of a current flow direction in a second stage when a charging system 200 operates in a precharging mode according to an embodiment of the application. As shown in FIG. 32, the control module may control the sixth contactor K8, the fourth contactor K6, and the fifth contactor K7 to be all closed, the first contactor K1, the second contactor K2, the third contactor K3, and the fifth contactor K9 to be all opened, the at least one upper switching transistor of the bridge arm module to be turned on, and the N lower switching transistors of the bridge arm module to be all turned off. At this time, due to a freewheeling effect of an inductor connected in series to the at least one upper switching transistor (the inductor connected in series to the at least one upper switching transistor is the inductor connected in series to the at least one lower switching transistor), the direct current charging pile and the inductor connected in series to the at least one upper switching transistor jointly charge the precharge capacitor C1, thereby implementing precharging of the precharge capacitor C1 by the direct current charging pile.

Durations of the first stage and the second stage may be different, and the durations of the first stage and the second stage may be determined based on a parameter of the inductor, the output voltage of the direct current charging pile, and a parameter of the precharge capacitor C1.

It will be noted that when the inductor connected in series to the at least one lower switching transistor is charged in the first stage, the inductor cannot be in a saturated state.

In this embodiment of the application, during precharging of the precharge capacitor C1, the direct current charging pile and the inductor connected in series to the at least one upper switching transistor jointly charge the precharge capacitor C1. Due to the freewheeling effect of the inductor, a sudden large charging current is prevented. This avoids a large current generated during precharging, thereby improving safety of precharging.

In each of FIG. 26 to FIG. 32, the inductive element 2011 is illustrated as three inductors by way of example. When a charging module is in the boost mode, the buck mode, or the precharging mode, only one of the three inductors may be turned on, or the three inductors may be simultaneously turned on. This is not limited in embodiments of the application.

When only one of the three inductors is turned on, an interleaved turn-on way may be used. For example, the three inductors include an inductor L1, an inductor L2, and an inductor L3. In a current cycle, the inductor L1 is turned on; in the next cycle, the inductor L2 is turned on; and in a cycle after the next cycle, the inductor L3 is turned on. When the inductor L1, the inductor L2, and the inductor L3 are turned on in a periodically interleaved way, ripples of the inductors can be reduced.

In embodiments of the application, when the output voltage of the direct current charging pile is low, compatibility with a function of charging by a low-voltage charging pile is achieved through operation in the boost mode. In addition, for a charging pile with a high output voltage, through operation in the buck mode, the direct current charging pile maximizes its output power within a range that implements charging of a low-voltage vehicle or is tolerable by the entire vehicle, thereby reducing charging time. The boost mode and the buck mode improve compatibility and convenience of electric vehicle charging. Both the boost circuit and the buck circuit in embodiments of the application involve an inductor and switching transistors, which can effectively avoid risk of a short circuit between the vehicle and the charging pile during charging. In the direct charging mode, the precharge capacitor may be precharged first to prevent the risk of a short circuit between the vehicle and the charging pile. The fifth contactor is in a closed state in both the boost mode and the buck mode. Adding the fifth contactor can distinguish between a driving condition and a charging condition. Under driving or similar operating conditions, the fifth contactor is opened to prevent a charging port from becoming live when a motor control unit operates. This avoids risk of electric shock when an operator accidentally touches the charging port or a corresponding position without awareness. During charging, the fifth contactor is closed. Because a charging connector is already plugged in during charging, the foregoing risk of electric shock is avoided.

In conclusion, the charging system in the present disclosure includes a charging circuit and a controller. The charging circuit is connected to the controller, and the charging circuit includes an inductive element, a bridge arm module, and a switch component. The charging system is configured to charge a power battery. One end of the switch component is configured to connect to a power supply apparatus. The other end of the switch component is electrically connected to a first end of the inductive element. A second end of the inductive element is configured to connect to the power battery via the bridge arm module. The controller controls the switch component and the bridge arm module according to a target charging mode, to charge the power battery via the power supply apparatus and/or the inductive element. The target charging mode includes at least one of the following: a boost charging mode, a buck charging mode, and a direct charging mode. The present disclosure reuses the existing inductive element and bridge arm module of the vehicle to precharge a precharge capacitor and charge the power battery according to the target charging mode, thereby achieving compatibility with power supply apparatuses having different voltages without incorporating additional circuit structures.

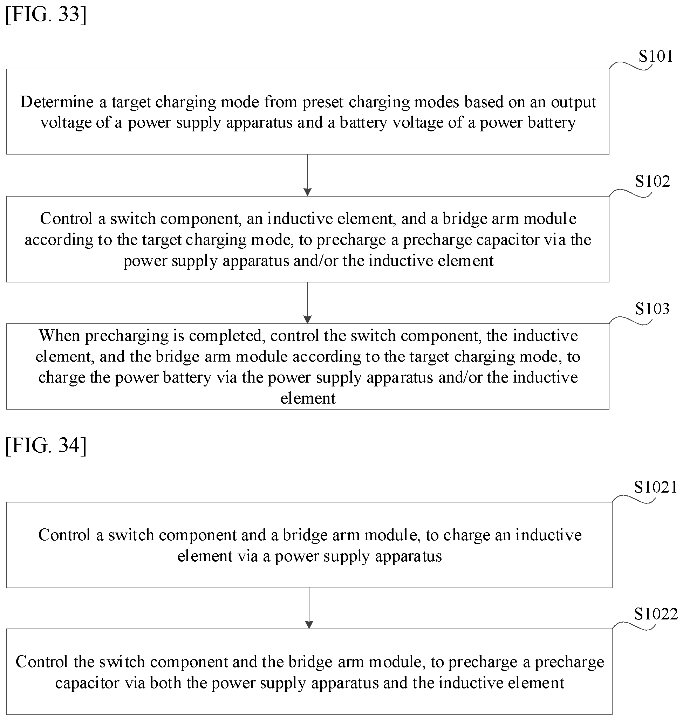

FIG. 33 is a flowchart of a charging control method according to an example embodiment. As shown in FIG. 33, the method includes the following steps.

Step S101: determine a target charging mode from preset charging modes based on an output voltage of a power supply apparatus and a battery voltage of a power battery.

For example, the power supply apparatus in the present disclosure may be a charging pile or a direct current power supply, such as a battery. This is not specifically limited in the present disclosure. The present disclosure is applicable to a charging circuit. The charging circuit may include a precharge capacitor, a power battery, a switch component, an inductive element, and a bridge arm module. The precharge capacitor may be connected in parallel to the power battery. One end of the switch component is configured to connect to the power supply apparatus. The other end of the switch component is electrically connected to a first end of the inductive element. A second end of the inductive element is configured to connect to the power battery via the bridge arm module. The bridge arm module may be a three-phase inverter circuit in a motor controller, and the inductive element may be an inductor in a motor, thereby achieving functional reuse of the motor controller and a motor module. As a result, a circuit structure is simplified, and manufacturing costs are reduced.

An output voltage of the power supply apparatus and a battery voltage of the power battery may not be necessarily consistent. Therefore, after the power supply apparatus is connected to the charging circuit, a corresponding target charging mode may be first determined from preset charging modes based on a magnitude relationship between the output voltage of the power supply apparatus and the battery voltage of the power battery. The preset charging modes may include at least one of the following: a boost charging mode, a buck charging mode, and a direct charging mode.

In some embodiments, when the output voltage of the power supply apparatus is less than the battery voltage of the power battery, the boost charging mode may be used as the target charging mode; when the output voltage of the power supply apparatus is greater than the battery voltage of the power battery, and a difference between the output voltage and the battery voltage is greater than a first preset voltage threshold and less than a second preset voltage threshold, the direct charging mode may be used as the target charging mode; and when the output voltage of the power supply apparatus is greater than the battery voltage of the power battery, and the difference between the output voltage and the battery voltage is greater than the second preset voltage threshold, the buck charging mode may be used as the target charging mode.

Step S102: control a switch component, an inductive element, and a bridge arm module according to the target charging mode, to precharge a precharge capacitor via the power supply apparatus and/or the inductive element.

For example, different charging modes correspond to different switch states in the charging circuit, and the switch states include states of switches in the switch component and states of switches in the bridge arm module. After the target charging mode is determined, the states of the switches in the switch component and the states of the switches in the bridge arm module may be controlled according to the target charging mode, to precharge the precharge capacitor via the power supply apparatus and/or the inductive element.

In some other embodiments, when the target charging mode is the boost charging mode, the precharge capacitor may be jointly precharged via the power supply apparatus and the inductive element, to implement boost precharging of the precharge capacitor; when the target charging mode is the buck charging mode, the precharge capacitor may be precharged via the inductive element, to implement buck precharging of the precharge capacitor; and when the target charging mode is the direct charging mode, the precharge capacitor may be precharged via the power supply apparatus, to implement direct precharging of the precharge capacitor.

Step S103: when precharging is completed, control the switch component, the inductive element, and the bridge arm module according to the target charging mode, to charge the power battery via the power supply apparatus and/or the inductive element.

For example, after precharging of the precharge capacitor is completed, the states of the switches in the switch component and the states of the switches in the bridge arm module may be controlled according to the target charging mode, to charge the power battery via the power supply apparatus and/or the inductive element.

In some other embodiments, when the target charging mode is the boost charging mode, the power battery may be jointly charged via the power supply apparatus and the inductive element, to implement boost charging of the power battery; when the target charging mode is the buck charging mode, the power battery may be charged via the inductive element, to implement buck charging of the power battery; and when the target charging mode is the direct charging mode, the power battery may be charged via the power supply apparatus, to implement direct charging of the power battery.

In this way, when the output voltage of the power supply apparatus is less than a charging voltage of the power battery, the power battery may be boost-charged in the boost charging mode; when the output voltage of the power supply apparatus is greater than the charging voltage of the power battery, the power battery may be buck-charged in the buck charging mode, so that the power supply apparatus can maximize its output power, thereby reducing charging time; and when the output voltage of the power supply apparatus is equal to the charging voltage of the power battery, the power battery may be directly charged in the direct charging mode, thereby achieving compatibility with power supply apparatuses having different voltages, and improving charging flexibility and adaptability between the power battery and the power supply apparatus. In addition, circuit structures of a motor controller and a motor of a vehicle are reused, eliminating the need to incorporate an additional boost or buck circuit structure; and the precharge capacitor is precharged via the power supply apparatus without incorporating an additional precharge branch, thereby simplifying the circuit structure and reducing manufacturing costs.

FIG. 34 is a flowchart of another charging control method according to an example embodiment. As shown in FIG. 34, the target charging mode may include the boost charging mode, and correspondingly, step S102 may be implemented through the following steps:
Step S1021: control the switch component and the bridge arm module, to charge the inductive element via the power supply apparatus.
Step S1022: control the switch component and the bridge arm module, to precharge the precharge capacitor via the power supply apparatus and the inductive element simultaneously.

For example, when the target charging mode is the boost charging mode, the states of the switches in the switch component and the states of the switches in the bridge arm module may first be controlled according to the boost charging mode, to cause the inductive element to be charged by the power supply apparatus via the charging circuit. Then, the states of the switches in the switch component and the states of the switches in the bridge arm module may be controlled, to cause the precharge capacitor to be precharged by the power supply apparatus and the inductive element simultaneously, thereby implementing boost precharging of the precharge capacitor.

In some embodiments, steps S1021 and S1022 may be repeatedly performed in sequence at a target frequency, to periodically charge the inductive element, and precharge the precharge capacitor via the power supply apparatus and the inductive element simultaneously, thereby implementing continuous boost precharging of the precharge capacitor. The target frequency may be a preset fixed value, or may be obtained through calculation in real time during precharging. For example, the target frequency may be obtained through calculation based on a preset precharging time, an energy storage parameter of the inductive element, parameters of the switches in the bridge arm module, an actual output voltage of the power supply apparatus, and the like. In a possible implementation, a duty cycle of a PWM (Pulse Width Modulation) wave may be determined based on the target frequency, and the charging circuit may be controlled using the PWM wave to repeatedly perform step S1021 and step S1022 at the target frequency.

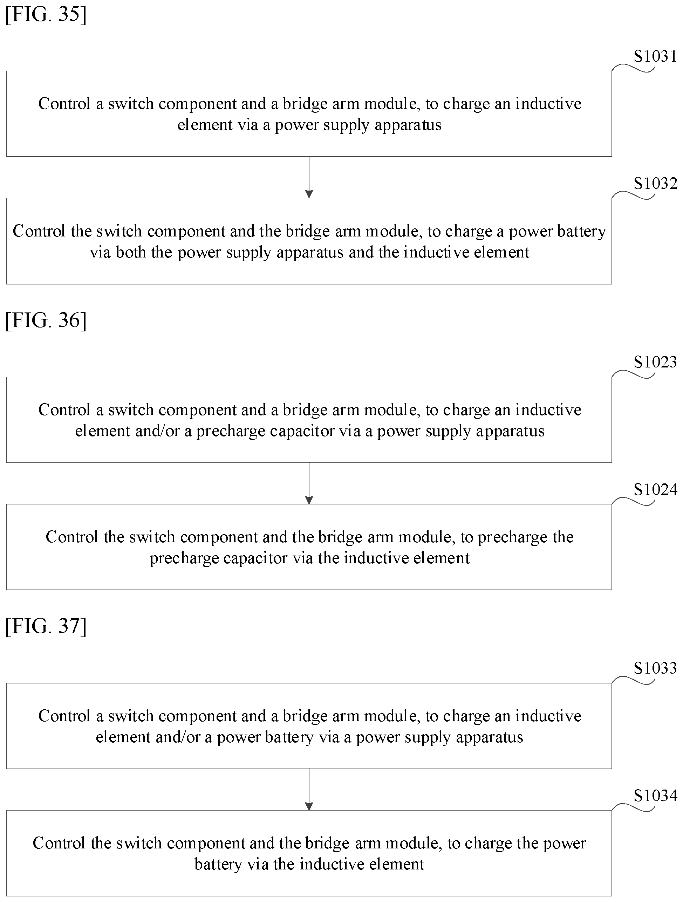

FIG. 35 is a flowchart of another charging control method according to an example embodiment. As shown in FIG. 35, when the target charging mode includes the boost charging mode, correspondingly, step S103 may be implemented through the following steps:
Step S1031: control the switch component and the bridge arm module, to charge the inductive element via the power supply apparatus.
Step S1032: control the switch component and the bridge arm module, to charge the power battery via the power supply apparatus and the inductive element simultaneously.

For example, when the target charging mode is the boost charging mode, the states of the switches in the switch component and the states of the switches in the bridge arm module may first be controlled according to the boost charging mode, to cause the inductive element to be charged by the power supply apparatus via the charging circuit. Then, the states of the switches in the switch component and the states of the switches in the bridge arm module may be controlled, to cause the power battery to be charged by the power supply apparatus and the inductive element simultaneously, thereby implementing boost charging of the power battery.

In some embodiments, steps S1031 and S1032 may be repeatedly performed in sequence at a target frequency, to periodically charge an energy storage module, and precharge the power battery via the power supply apparatus and the inductive element simultaneously, thereby implementing continuous boost precharging of the power battery.

FIG. 36 is a flowchart of another charging control method according to an example embodiment. As shown in FIG. 36, the target charging mode may include the buck charging mode, and correspondingly, step S102 may be implemented through the following steps:
Step S1023: control the switch component and the bridge arm module, to charge the inductive element and/or the precharge capacitor via the power supply apparatus.
Step S1024: control the switch component and the bridge arm module, to precharge the precharge capacitor via the inductive element.

For example, when the target charging mode is the buck charging mode, the states of the switches in the switch component and the states of the switches in the bridge arm module may first be controlled according to the buck charging mode, to cause the inductive element to be charged by the power supply apparatus via the charging circuit. Alternatively, the states of the switches in the switch component and the states of the switches in the bridge arm module may be controlled, to cause the inductive element and the precharge capacitor to be charged in series by the power supply apparatus via the charging circuit, thereby implementing buck precharging of the precharge capacitor while charging the inductive element. Then, the states of the switches in the switch component and the states of the switches in the bridge arm module may be controlled, to cause the precharge capacitor to be charged by the inductive element, thereby implementing buck precharging of the precharge capacitor.

In some embodiments, steps S1023 and S1024 may be repeatedly performed in sequence at a target frequency, to periodically charge the inductive element, and precharge the precharge capacitor via the inductive element, thereby implementing continuous buck precharging of the precharge capacitor.

FIG. 37 is a flowchart of another charging control method according to an example embodiment. As shown in FIG. 37, when the target charging mode includes the buck charging mode, correspondingly, step S103 may be implemented through the following steps:
Step S1033: control the switch component and the bridge arm module, to charge the inductive element and/or the power battery via the power supply apparatus.
Step S1034: control the switch component and the bridge arm module, to charge the power battery via the inductive element.

For example, when the target charging mode is the buck charging mode, the states of the switches in the switch component and the states of the switches in the bridge arm module may first be controlled according to the buck charging mode, to cause the inductive element to be charged by the power supply apparatus via the charging circuit. Alternatively, the states of the switches in the switch component and the states of the switches in the bridge arm module may be controlled, to cause the inductive element and the power battery to be charged in series by the power supply apparatus via the charging circuit, thereby implementing buck charging of the power battery while charging the inductive element. Then, the states of the switches in the switch component and the states of the switches in the bridge arm module may be controlled, to cause the power battery to be charged by the inductive element, thereby implementing buck charging of the power battery.

In some embodiments, steps S1033 and S1034 may be repeatedly performed in sequence at a target frequency, to periodically charge the inductive element, and charge the power battery via the inductive element, thereby implementing continuous buck charging of the power battery.

According to some other embodiments of the present disclosure, the target charging mode may include the direct charging mode. Based on the target charging mode, correspondingly, step S102 may be implemented in the following process:
controlling the switch component and the bridge arm module, to precharge the precharge capacitor via the power supply apparatus.

When the target charging mode includes the direct charging mode, correspondingly, step S103 may be implemented in the following process:
controlling the switch component and the bridge arm module, to charge the power battery via the power supply apparatus.

For example, when the target charging mode is the direct charging mode, the states of the switches in the switch component and the states of the switches in the bridge arm module may be controlled according to the target direct charging mode, to directly precharge the precharge capacitor via the power supply apparatus.

After precharging ends, the states of the switches in the switch component and the states of the switches in the bridge arm module may be controlled according to the direct charging mode, to directly charge the power battery via the power supply apparatus.

In conclusion, in the present disclosure, the target charging mode is first determined from the preset charging modes based on the output voltage of the power supply apparatus and the battery voltage of the power battery, where the preset charging modes include at least one of the following: the boost charging mode, the buck charging mode, and the direct charging mode; and then, the switch component and the bridge arm module are controlled according to the target charging mode to precharge the precharge capacitor via the power supply apparatus and/or the inductive element, and when precharging is completed, the switch component and the inductive element are controlled according to the target charging mode to charge the power battery via the power supply apparatus and/or the inductive element. The present disclosure reuses the existing inductive element and bridge arm module of the vehicle to precharge the precharge capacitor and charge the power battery according to the target charging mode, thereby achieving compatibility with power supply apparatuses having different voltages without incorporating additional circuit structures. In addition, the precharge capacitor is precharged via the power supply apparatus, eliminating the need for an additional precharge branch. As a result, a circuit structure is simplified, and manufacturing costs are reduced.

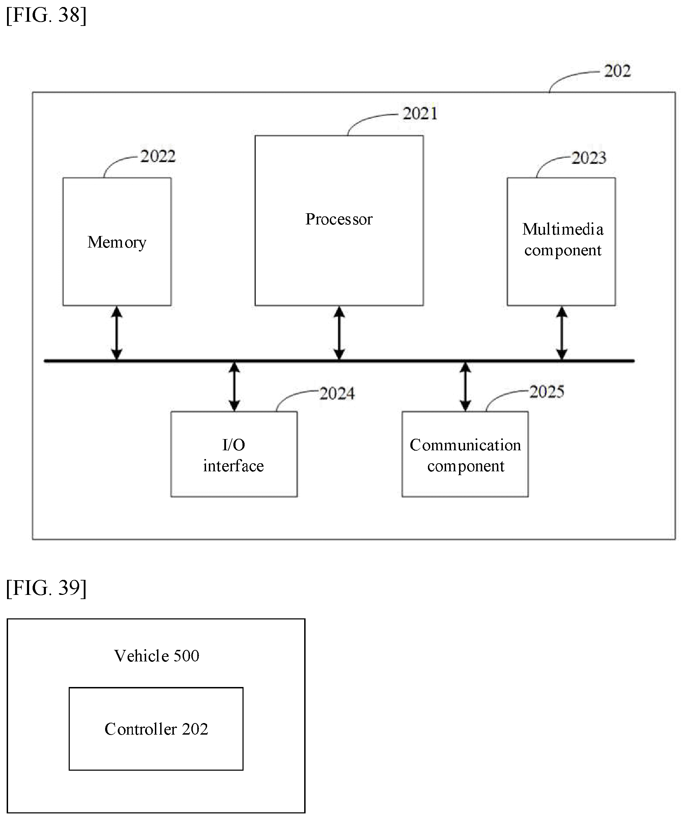

FIG. 38 is a block diagram of a controller according to an example embodiment. As shown in FIG. 38, the controller 202 may include a processor 2021 and a memory 2022. The controller 202 may further include one or more of the following: a multimedia component 2023, an input/output (I/O) interface 2024, and a communication component 2025.

The processor 2021 is configured to control an overall operation of the controller 202, to perform all or part of the steps of the foregoing charging control method. The memory 2022 is configured to store various types of data to support operations of the controller 202. Such data may include, for example, instructions for any application or method operating on the controller 202, and application-related data, such as contact data, sent and received messages, images, audios, videos, and the like. The memory 2022 may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The multimedia component 2023 may include a screen and an audio component. The screen may be, for example, a touch screen. The audio component is configured to output and/or input audio signals. For example, the audio component may include a microphone, and the microphone is configured to receive external audio signals. The received audio signals may be further stored in the memory 2022 or sent via the communication component 2025. The audio component further includes at least one speaker, configured to output audio signals. The I/O interface 2024 provides interfaces between the processor 2021 and other interface modules. The other interface modules may be a keyboard, a mouse, buttons, and the like. These buttons may be virtual buttons or physical buttons. The communication component 2025 is configured to enable wired or wireless communication between the controller 202 and other devices. Wireless communication, such as Wi-Fi, Bluetooth, near field communication (NFC), 2G, 3G, 4G, NB-IOT, eMTC, 5G, or the like, or a combination of one or more thereof, which is not limited herein. Therefore, the communication component 2025 may correspondingly include a Wi-Fi module, a Bluetooth module, an NFC module, or the like.

In an example embodiment, the controller 202 may be implemented by one or more of the following: an application-specific integrated circuit (ASIC), a digital signal processor (DSP), a digital signal processing device (DSPD), a programmable logic device (PLD), a field programmable gate array (FPGA), a controller, a microcontroller, a microprocessor, or another electronic component, and is configured to perform the foregoing charging control method.

In another example embodiment, a computer-readable storage medium including program instructions is further provided. When the program instructions are executed by a processor, the steps of the foregoing charging control method are implemented. For example, the computer-readable storage medium may be the memory 2022 including the program instructions, and the program instructions may be executed by the processor 2021 of the controller 202 to perform the foregoing charging control method.

FIG. 39 is a block diagram of a vehicle according to an example embodiment. As shown in FIG. 39, the vehicle 500 is provided with a controller 202.

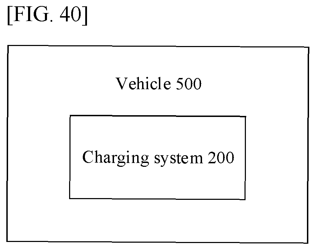

FIG. 40 is a block diagram of another vehicle according to an example embodiment. As shown in FIG. 40, the vehicle 500 is provided with a charging system 200.

The foregoing describes preferred embodiments of the present disclosure in detail with reference to the accompanying drawings. However, the present disclosure is not limited to specific details in the foregoing embodiments. Within the scope of the technical concept of the present disclosure, a plurality of simple variations may be made to the technical solutions of the present disclosure, and all these simple variations fall within the protection scope of the present disclosure.

In addition, it will be noted that various specific technical features described in the foregoing specific embodiments may be combined in any appropriate manner without contradiction. To avoid unnecessary repetition, various possible combinations are not further described in the present disclosure.

In addition, any combination of different embodiments of the present disclosure may be made, and will be considered as the content disclosed in the present disclosure as long as it does not violate the spirit of the present disclosure.

## Claims

1. A charging system (200), wherein the charging system (200) comprises:
a controller (202); and
a charging circuit (201), wherein the charging circuit (201) is connected to the controller (202), the charging system is configured to charge a power battery (300), and the charging circuit (201) comprises:
an inductive element (2011);
a bridge arm module (2012); and
a switch component (2013), wherein one end of the switch component (2013) is configured to connect to a power supply apparatus (400), the other end of the switch component (2013) is connected to a first end of the inductive element (2011), and a second end of the inductive element (2011) is configured to connect to the power battery (300) via the bridge arm module (2012); and
the controller (202) is configured to control the switch component (2013) and the bridge arm module (2012) according to a target charging mode, to charge the power battery (300) via the power supply apparatus (400) and/or the inductive element (2011), and the target charging mode comprises at least one of the following: a boost charging mode, a buck charging mode, and a direct charging mode.

2. The charging system according to claim 1, wherein the controller (202) is further configured to:
determine the target charging mode from preset charging modes based on an output voltage of the power supply apparatus (400) and a battery voltage of the power battery (300).

3. The charging system according to claim 1 or 2, wherein the switch component (2013) comprises a first switch component (2013a) and a second switch component (2013b); and
the power battery (300) is configured to connect to the power supply apparatus (400) via the first switch component (2013a) and the second switch component (2013b), the power battery (300) is further configured to connect to the bridge arm module (2012) via the first switch component (2013a), and the inductive element (2011) is configured to connect to the power supply apparatus (400) via the second switch component (2013b).

4. The charging system according to claim 3, wherein the charging circuit (201) further comprises a precharge capacitor (C1);
the precharge capacitor (C1) is configured to connect in parallel to the power battery (300) via the first switch component (2013a), and the precharge capacitor (C1) is further connected to the bridge arm module (2012); and
the controller (202) is configured to control the switch component (2013) and the bridge arm module (2012) according to the target charging mode, to precharge the precharge capacitor (C1) via the power supply apparatus (400) and/or the inductive element (2011).

5. The charging system according to any one of claims 1 to 4, wherein the charging circuit (201) further comprises a filter capacitor (C2); and
one end of the filter capacitor (C2) is connected to the bridge arm module (2012), and the other end of the filter capacitor (C2) is connected to the inductive element (2011).

6. The charging system according to claim 4, wherein a first end of the precharge capacitor (C1) is connected to an upper bridge arm of the bridge arm module (2012), a second end of the precharge capacitor (C1) is connected to a lower bridge arm of the bridge arm module (2012), a bridge arm midpoint of the bridge arm module (2012) is connected to the first end of the inductive element (2011), the second end of the inductive element (2011) is connected to the second switch component (2013b), the upper bridge arm of the bridge arm module (2012) is further connected to the second switch component (2013b), and the lower bridge arm of the bridge arm module (2012) is further connected to the second switch component (2013b).

7. The charging system according to claim 6, wherein the first switch component (2013a) comprises:
a first contactor (K1), wherein a first end of the first contactor (K1) is configured to connect to a first end of the power battery (300), and a second end of the first contactor (K1) is connected to the first end of the precharge capacitor (C1);
a second contactor (K2), wherein a first end of the second contactor (K2) is configured to connect to a second end of the power battery (300), and a second end of the second contactor (K2) is connected to the second end of the precharge capacitor (C1); and
a third contactor (K3), wherein a first end of the third contactor (K3) is configured to connect to the first end of the power battery (300), and a second end of the third contactor (K3) is connected to the second end of the inductive element (2011); and
the second switch component (2013b) comprises:
a first switching transistor (K4), wherein a first end of the first switching transistor (K4) is connected to the upper bridge arm of the bridge arm module (2012), and a second end of the first switching transistor (K4) is configured to connect to a first end of the power supply apparatus (400);
a fourth contactor (K6), wherein a first end of the fourth contactor (K6) is connected to the lower bridge arm of the bridge arm module (2012), and a second end of the fourth contactor (K6) is configured to connect to a second end of the power supply apparatus (400); and
a second switching transistor (K5), wherein a first end of the second switching transistor (K5) is connected to the second end of the inductive element (2011), and a second end of the second switching transistor (K5) is configured to connect to the first end of the power supply apparatus (400).

8. The charging system according to claim 7, wherein the controller (202) is specifically configured to:
close the fourth contactor (K6), turn on the second switching transistor (K5), open the first contactor (K1), the second contactor (K2), and the third contactor (K3), and turn off the first switching transistor (K4); and
periodically control a switching transistor of the upper bridge arm of the bridge arm module (2012) and a switching transistor of the lower bridge arm of the bridge arm module (2012) to be alternately turned on, to perform boost precharging on the precharge capacitor (C1) according to the boost charging mode; and
the controller (202) is specifically configured to:
close the first contactor (K1), the second contactor (K2), and the fourth contactor (K6), turn on the second switching transistor (K5), open the third contactor (K3), and turn off the first switching transistor (K4); and
periodically control the upper switching transistor and the lower switching transistor of the bridge arm module (2012) to be alternately turned on, to perform boost charging on the power battery (300) according to the boost charging mode.

9. The charging system according to claim 7 or 8, wherein the controller (202) is specifically configured to:
close the fourth contactor (K6), turn on the switching transistor of the upper bridge arm of the bridge arm module (2012), open the first contactor (K1), the second contactor (K2), and the third contactor (K3), and turn off the first switching transistor (K4) and the switching transistor of the lower bridge arm of the bridge arm module (2012); and
periodically turn on the second switching transistor (K5) to perform buck precharging on the precharge capacitor (C1) according to the buck charging mode; and
the controller (202) is specifically configured to:
close the second contactor (K2) and the third contactor (K3), turn on the first switching transistor (K4), close the fourth contactor (K6), open the first contactor (K1), and turn off the second switching transistor (K5); and
periodically control the switching transistor of the upper bridge arm of the bridge arm module (2012) and the switching transistor of the lower bridge arm of the bridge arm module (2012) to be alternately turned on, to perform buck charging on the power battery (300) according to the buck charging mode.

10. The charging system according to any one of claims 7 to 9, wherein the controller (202) is specifically configured to:
close the fourth contactor (K6), open the first contactor (K1), the second contactor (K2), and the third contactor (K3), and turn off the second switching transistor (K5), the switching transistor of the upper bridge arm of the bridge arm module (2012), and the switching transistor of the lower bridge arm of the bridge arm module (2012); and
periodically turn on the first switching transistor (K4) to perform direct precharging on the precharge capacitor (C1) according to the direct charging mode; and
the controller (202) is specifically configured to:
close the first contactor (K1), the second contactor (K2), and the fourth contactor (K6), open the third contactor (K3), and turn off the second switching transistor (K5), the switching transistor of the upper bridge arm of the bridge arm module (2012), and the switching transistor of the lower bridge arm of the bridge arm module (2012); and
periodically turn on the first switching transistor (K4), and after the output voltage of the power supply apparatus (400) remains within a preset voltage range, maintain the first switching transistor (K4) on to perform direct charging on the power battery (300) according to the direct charging mode.

11. The charging system according to claim 1, wherein the switch component (2013) comprises a switching transistor;
one end of the switching transistor is configured to electrically connect to the power supply apparatus (400) via a charging port (J), and the other end of the switching transistor is connected to the first end of the inductive element (2011);
the second end of the inductive element (2011) is configured to electrically connect to the power battery (300) via the bridge arm module (2012); and
the controller (202) is configured to:
when the charging system (200) operates in the boost charging mode, control an operating state of the switching transistor, and form a boost charging circuit using the inductive element (2011) and the bridge arm module (2012), to boost a voltage received at the charging port (J) and then charge the power battery (300); and
when the charging system (200) operates in the buck charging mode, control an operating state of the switch component (2013), and form a buck charging circuit using the inductive element (2011) and the bridge arm module (2012), to buck the voltage received at the charging port (J) and then charge the power battery (300).

12. The charging system according to claim 11, wherein the switch component (2013) comprises: a first switching transistor (K4), wherein a first end of the first switching transistor (K4) is configured to electrically connect to a first end of the charging port (J); and
a second end of the first switching transistor (K4) is electrically connected to the first end of the inductive element (2011); and
a second switching transistor (K5), wherein a first end of the second switching transistor (K5) is electrically connected to the first end of the inductive element (2011);
a second end of the second switching transistor (K5) is configured to electrically connect to a second end of the charging port (J); and
the second end of the first switching transistor (K4) is electrically connected to the first end of the second switching transistor (K5), and an electrical connection point is electrically connected to the first end of the inductive element (2011).

13. The charging system according to claim 11 or 12, wherein the charging system (200) further comprises a filter capacitor (C2);
one end of the filter capacitor (C2) is electrically connected to the first end of the inductive element (2011), and the other end of the filter capacitor (C2) is electrically connected to a negative terminal of the bridge arm module (2012); and
the filter capacitor (C2) is configured to filter electrical energy received at the charging port (J).

14. The charging system according to any one of claims 11 to 13, wherein the charging system (200) further comprises a fifth contactor (K7) or a fourth contactor (K6);
one end of the fifth contactor (K7) is electrically connected to a second end of the switching transistor, and the other end of the fifth contactor (K7) is connected to the first end of the inductive element (2011);
the fifth contactor (K7) is configured to control opening and closing of a circuit between the second end of the switching transistor and the first end of the inductive element (2011);
one end of the fourth contactor (K6) is electrically connected to the negative terminal of the bridge arm module (2012), and the other end of the fourth contactor (K6) is configured to electrically connect to the second end of the charging port (J); and
the fourth contactor (K6) is configured to control opening and closing of a circuit between the charging port (J) and the negative terminal of the bridge arm module (2012).

15. The charging system according to any one of claims 12 to 14, wherein the first switching transistor (K4) comprises:
a first field-effect transistor, wherein a first end of the first field-effect transistor is configured to electrically connect to the first end of the charging port (J), a third end of the first field-effect transistor is configured to receive a first control signal, and a second end of the first field-effect transistor is electrically connected to the first end of the inductive element (2011); and
the second switching transistor (K5) comprises:
a second field-effect transistor, wherein a first end of the second field-effect transistor is electrically connected to the first end of the inductive element (2011), a third end of the second field-effect transistor is configured to receive a second control signal, and a second end of the second field-effect transistor is electrically connected to the second end of the charging port (J) and a negative terminal of the power battery (300) separately.

16. The charging system according to any one of claims 12 to 15, wherein the inductive element (2011) comprises an N-phase winding, and the bridge arm module (2012) comprises N bridge arms connected in parallel;
first ends of the N-phase winding are electrically connected to the other end of the switching transistor; and
second ends of the N-phase winding are connected to midpoints of the N bridge arms in a one-to-one correspondence, wherein N is an integer greater than or equal to 1.

17. The charging system according to claim 16, wherein the controller (202) is specifically configured to:
when the charging system (200) operates in the boost charging mode, control the first switching transistor (K4) to be turned on and the second switching transistor (K5) to be turned off, and control respective upper switching transistors of the N bridge arms to be turned off and a lower switching transistor of at least one bridge arm to be turned on for a first preset time, causing the N-phase winding to be charged by the electrical energy received at the charging port (J);
after turn-on for the first preset time, control respective lower switching transistors of the N bridge arms to be turned off and an upper switching transistor of the at least one bridge arm to be turned on, causing the power battery (300) to be jointly charged via the charging port (J) and the N-phase winding; and
repeat the foregoing process until charging ends.

18. The charging system according to claim 16 or 17, wherein the controller (202) is specifically configured to:
when the charging system (200) operates in the buck charging mode, in a first stage, control the first switching transistor (K4) to be turned on and the second switching transistor (K5) to be turned off, and control the respective lower switching transistors of the N bridge arms to be turned off and an upper switching transistor of at least one bridge arm to be turned on, causing the N-phase winding and the power battery (300) to be simultaneously charged via the charging port (J);
in a second stage, control the first switching transistor (K4) to be turned off and the second switching transistor (K5) to be turned on, and control the respective lower switching transistors of the N bridge arms to be turned off and the upper switching transistor of the at least one bridge arm to be turned on, causing the power battery (300) to be buck-charged by a freewheeling current of the N-phase winding; and
repeat the foregoing process until charging ends.

19. The charging system according to any one of claims 16 to 18, wherein the charging system (200) further comprises a precharge capacitor (C1), a first contactor (K1), and a second contactor (K2);
the precharge capacitor (C1) is electrically connected to a positive terminal and the negative terminal of the power battery (300); and
the controller (202) is specifically configured to:
when the charging system (200) operates in a boost precharging mode, control the first switching transistor (K4) to be turned on, the second switching transistor (K5) to be turned off, and the first contactor (K1) and the second contactor (K2) to be opened, and control the respective upper switching transistors of the N bridge arms to be turned off and a lower switching transistor of at least one bridge arm to be turned on for a second preset time, causing the three-phase winding to be charged by the electrical energy received at the charging port (J) or electrical energy provided by an in-vehicle power supply; and
after turn-on for the second preset time, control the respective lower switching transistors of the N bridge arms to be turned off and an upper switching transistor of the at least one bridge arm to be turned on, causing the precharge capacitor (C1) to be jointly charged by the freewheeling current of the three-phase winding, and the electrical energy received at the charging port (J) or the electrical energy provided by the in-vehicle power supply; and repeat the process until a difference between a voltage of the precharge capacitor (C1) and a current real-time voltage of the power battery (300) falls within a preset range;
when the charging system (200) operates in a buck precharging mode, in a first stage, control the first contactor (K1) and the second contactor (K2) to be opened, the first switching transistor (K4) to be turned on, and the second switching transistor (K5) to be turned off, and control the respective lower switching transistors of the N bridge arms to be turned off and an upper switching transistor of at least one bridge arm to be turned on, causing the N-phase winding and the precharge capacitor (C1) to be simultaneously charged by the electrical energy received at the charging port (J) or the electrical energy provided by the in-vehicle power supply; and
in a second stage, control the first contactor (K1) and the second contactor (K2) to be opened, the first switching transistor (K4) to be turned off, and the second switching transistor (K5) to be turned on, and control the respective lower switching transistors of the N bridge arms to be turned off and the upper switching transistor of the at least one bridge arm to be turned on, causing the precharge capacitor (C1) to continue to be buck-charged by the freewheeling current of the N-phase winding; and repeat the process until the difference between the voltage of the precharge capacitor (C1) and the current real-time voltage of the power battery (300) falls within the preset range; and
when the charging system (200) operates in a direct precharging mode, control the first switching transistor (K4) to be turned on, the second switching transistor (K5) to be turned off, and the first contactor (K1) and the second contactor (K2) to be opened, and control the respective lower switching transistors of the N bridge arms to be turned off and an upper switching transistor of at least one bridge arm to be turned on, causing the electrical energy received at the charging port (J) or the electrical energy provided by the in-vehicle power supply to be transmitted to the precharge capacitor (C1) via the N-phase winding and the upper switching transistor of the at least one bridge arm and to directly charge the precharge capacitor (C1) until the difference between the voltage of the precharge capacitor (C1) and the current real-time voltage of the power battery (300) falls within the preset range.

20. The charging system according to claim 1, wherein the power supply apparatus (400) comprises a direct current power supply;
a first end of the bridge arm module (2012) is configured to connect to a positive terminal of the power battery (300), a second end of the bridge arm module (2012) is configured to connect to a negative terminal of the power battery (300), the first end of the inductive element (2011) is configured to connect to the direct current power supply via the switch component (2013), a bridge arm midpoint of the bridge arm module (2012) is connected to the second end of the inductive element (2011), and the second end of the bridge arm module (2012) is configured to connect to the direct current power supply; when the charging system (200) operates in a boost mode, the controller (202) controls an on/off state of the switch component (2013), to cause the bridge arm module (2012) and the inductive element (2011) to form a boost circuit; and
when the charging system (200) operates in a buck mode, the controller (202) controls the on/off state of the switch component (2013), to cause the bridge arm module (2012) and the inductive element (2011) to form a buck circuit.

21. The charging system according to claim 20, wherein the switch component (2013) comprises: a first contactor (K1), wherein the positive terminal of the power battery (300) is configured to connect to a first end of the first contactor (K1), and a second end of the first contactor (K1) is connected to the first end of the bridge arm module (2012); and
a second contactor (K2), wherein the negative terminal of the power battery (300) is configured to connect to a first end of the second contactor (K2), and a second end of the second contactor (K2) is connected to the second end of the bridge arm module (2012).

22. The charging system according to claim 21, wherein the switch component (2013) further comprises a third contactor (K3), a sixth contactor (K8), and a seventh contactor (K9); the first end of the first contactor (K1) is connected to a first end of the third contactor (K3); the second end of the first contactor (K1) is connected to a first end of the seventh contactor (K9); a second end of the seventh contactor (K9) is configured to connect to a positive terminal of the direct current power supply and a first end of the sixth contactor (K8); a second end of the third contactor (K3) is connected to a second end of the sixth contactor (K8); the second end of the sixth contactor (K8) is configured to connect to the first end of the inductive element (2011); and a negative terminal of the direct current power supply is configured to connect to the second end of the bridge arm module (2012).

23. The charging system according to claim 22, wherein the charging system (200) further comprises a precharge capacitor (C1), the second end of the first contactor (K1) is connected to a first end of the precharge capacitor (C1), and the second end of the second contactor (K2) is connected to a second end of the precharge capacitor (C1).

24. The charging system according to claim 22 or 23, wherein the bridge arm module (2012) comprises N bridge arm units connected in parallel, each bridge arm unit comprises an upper switching transistor and a lower switching transistor connected in series, the inductive element (2011) comprises N inductors, first ends of the N inductors are connected to the second end of the sixth contactor (K8), second ends of the N inductors are connected to bridge arm midpoints of the N bridge arm units in a one-to-one correspondence, and a bridge arm midpoint of each bridge arm unit is a connection point between the upper switching transistor and the lower switching transistor of each bridge arm unit, wherein N is an integer greater than or equal to 1.

25. The charging system according to claim 24, wherein the switch component (2013) further comprises:
a fourth contactor (K6), wherein the negative terminal of the direct current power supply is configured to connect to a first end of the fourth contactor (K6), and a second end of the fourth contactor (K6) is connected to the second end of the second contactor (K2); and
a fifth contactor (K7), wherein the second end of the sixth contactor (K8) is connected to a first end of the fifth contactor (K7), and a second end of the fifth contactor (K7) is connected to the first end of the inductive element (2011).

26. The charging system according to claim 25, wherein the charging system (200) further comprises a filter capacitor (C2), a first end of the filter capacitor (C2) is connected to the second end of the sixth contactor (K8), and a second end of the filter capacitor (C2) is connected to the second end of the fourth contactor (K6).

27. The charging system according to claim 25 or 26, wherein that the controller (202) controls the on/off state of the switch component (2013), to cause the bridge arm module (2012) and the inductive element (2011) to form the boost circuit comprises:
in a first stage, the controller (202) controls the sixth contactor (K8), the fourth contactor (K6), and the fifth contactor (K7) to be all closed, the third contactor (K3) and the seventh contactor (K9) to be both opened, at least one lower switching transistor of the bridge arm module (2012) to be turned on, and N upper switching transistors of the bridge arm module (2012) to be all turned off, to cause the direct current power supply to charge the inductive element (2011); and
in a second stage, the controller (202) controls the first contactor (K1), the second contactor (K2), the sixth contactor (K8), the fourth contactor (K6), and the fifth contactor (K7) to be all closed, the third contactor (K3) and the seventh contactor (K9) to be both opened, at least one upper switching transistor of the bridge arm module (2012) to be turned on, and N lower switching transistors of the bridge arm module (2012) to be all turned off, to cause the direct current power supply and the inductive element (2011) to charge the power battery (300).

28. The charging system according to claim 25 or 26, wherein that the controller (202) controls the on/off state of the switch component (2013), to cause the bridge arm module (2012) and the inductive element (2011) to form the buck circuit comprises:
in a first stage, the controller (202) controls the second contactor (K2), the third contactor (K3), the seventh contactor (K9), the fourth contactor (K6), and the fifth contactor (K7) to be all closed, the first contactor (K1) and the sixth contactor (K8) to be both opened, at least one upper switching transistor of the bridge arm module (2012) to be turned on, and N lower switching transistors of the bridge arm module (2012) to be all turned off, to cause the direct current power supply to charge the inductive element (2011) and the power battery (300); and
in a second stage, the controller (202) controls the second contactor (K2), the third contactor (K3), and the fifth contactor (K7) to be all closed, the first contactor (K1) and the sixth contactor (K8) to be both opened, at least one lower switching transistor of the bridge arm module (2012) to be turned on, and N upper switching transistors of the bridge arm module (2012) to be all turned off, to cause the inductive element (2011) to charge the power battery (300).

29. The charging system according to any one of claims 20 to 28, wherein
when the charging system (200) operates in a precharging mode, the controller (202) controls the on/off state of the switch component (2013), to cause the bridge arm module (2012) and the inductive element (2011) to form a precharge circuit.

30. The charging system according to claim 25 or 26, wherein that the controller (202) controls the on/off state of the switch component (2013) when the charging system (200) operates in the precharging mode, to cause the bridge arm module (2012) and the inductive element (2011) to form the precharge circuit comprises:
in a first stage, the controller (202) controls the sixth contactor (K8), the fourth contactor (K6), and the fifth contactor (K7) to be all closed, the first contactor (K1), the second contactor (K2), the third contactor (K3), and the seventh contactor (K9) to be all opened, at least one lower switching transistor of the bridge arm module (2012) to be turned on, and N upper switching transistors of the bridge arm module (2012) to be all turned off, to cause the direct current power supply to charge the inductive element (2011); and
in a second stage, the controller (202) controls the sixth contactor (K8), the fourth contactor (K6), and the fifth contactor (K7) to be all closed, the first contactor (K1), the second contactor (K2), the third contactor (K3), and the seventh contactor (K9) to be all opened, at least one upper switching transistor of the bridge arm module (2012) to be turned on, and N lower switching transistors of the bridge arm module (2012) to be all turned off, to cause the direct current power supply and the inductive element (2011) to charge the precharge capacitor (C1).

31. A charging control method, wherein the method comprises:
determining a target charging mode from preset charging modes based on an output voltage of a power supply apparatus and a battery voltage of a power battery, wherein the preset charging modes comprise at least one of the following: a boost charging mode, a buck charging mode, and a direct charging mode; and
controlling a switch component and an energy storage module according to the target charging mode, to charge the power battery via the power supply apparatus and/or the energy storage module.

32. A controller (202), comprising:
a memory, wherein the memory stores a computer program; and
a processor, configured to execute the computer program in the memory to perform the steps of the method according to claim 31.

33. A vehicle (500), wherein the vehicle comprises the controller (202) according to claim 32 or the charging system (200) according to any one of claims 1 to 30.
